# EUROPEAN PATENT APPLICATION

(11) **EP 4 822 321 A1**
(43) Date of publication of application: **14.10.2026**
(21) Application number: 24917290.9
(22) Date of filing: 20.11.2024
(51) Int. Cl.: G01L 27/00, G01L 19/00, G01L 19/08, G01L 19/14, G01P 15/02, G01P 15/18, G06F 1/16

(54) **ELECTRONIC DEVICE, METHOD, AND NON-TRANSITORY COMPUTER-READABLE STORAGE MEDIUM FOR PROVIDING PRESSURE INFORMATION**

(30) Priority: 12.01.2024 KR 20240005733; 24.01.2024 KR 20240011255
(71) Applicant: Samsung Electronics Co., Ltd., Suwon-si, Gyeonggi-do 16677 (KR)
(72) Inventor: SON, Hyungjin, Suwon-si Gyeonggi-do 16677 (KR); EOM, Kihun, Suwon-si Gyeonggi-do 16677 (KR)
(74) Representative: HGF
(86) International application number: PCT/KR2024/018428
(87) International publication number: WO 2025/150693

(57) **Abstract**

In embodiments, an electronic device is provided. The electronic device may comprise: a barometric pressure sensor including a sensing element and a waterproof member for protecting the sensing element; an inertial sensor; a processor; and a memory for storing instructions. The instructions, when executed by the processor, may cause the electronic device to: determine direction information of the barometric pressure sensor from sensing data of the inertial sensor; determine a correction value based on the direction information of the barometric pressure sensor on the basis of pressure offset data for the sensing element in each of designated directions of the barometric pressure sensor; and provide pressure information using the pressure data of the barometric pressure sensor and the correction value.

## Description

### [Technical Field]

The present disclosure relates to an electronic device, a method, and a non-transitory computer-readable storage medium for providing pressure information.

### [Background Art]

An electronic device may provide multiple functions. For example, the electronic device may provide a user with an operating state of the electronic device or an external environmental state. The external environmental state that may be provided to the user may be obtained through various sensors. For example, pressure information may be obtained through a barometric pressure sensor.

The above-described information may be provided as a related art for the purpose of helping understanding of the present disclosure. No argument or decision is made as to whether any of the above description may be applied as a prior art related to the present disclosure.

### [Disclosure]

### [Technical Solution]

In embodiments, an electronic device is provided. The electronic device may comprise a barometric pressure sensor including a sensing element and a waterproof member for protecting the sensing element, an inertial sensor, a processor, and memory storing instructions. The instructions, when executed by the processor, may cause the electronic device to determine direction information of the barometric pressure sensor from sensing data of the inertial sensor, determine a correction value in accordance with the direction information of the barometric pressure sensor, based on pressure offset data for the sensing element in each of designated directions of the barometric pressure sensor, and provide pressure information using pressure data of the barometric pressure sensor and the correction value.

In embodiments, an electronic device is provided. The electronic device may comprise a display, a barometric pressure sensor including a sensing element and a waterproof member for protecting the sensing element, an inertial sensor, a processor, and memory storing instructions. The instructions, when executed by the processor, may cause the electronic device to display, through the display, first pressure information through a first correction value in accordance with a first direction when the barometric pressure sensor faces the first direction at a designated height, and to display, through the display, second pressure information through a second correction value in accordance with a second direction when the barometric pressure sensor faces the second direction at the designated height. An angle formed between the second direction and a gravity direction may be smaller than an angle between the first direction and the gravity direction. The second correction value may indicate larger pressure magnitude than the first correction value. For example, first pressure data measured when the barometric pressure sensor faces the first direction at the designated height may be smaller than second pressure data measured when the barometric pressure sensor faces the second direction at the designated height.

In embodiments, a non-transitory computer-readable recording medium is provided. The non-transitory computer-readable recording medium may store instructions. The instructions, when executed by a processor, may cause an electronic device to determine direction information of a barometric pressure sensor of the electronic device from sensing data of an inertial sensor of the electronic device, determine a correction value in accordance with the direction information of the barometric pressure sensor based on pressure offset data for a sensing element of the barometric pressure sensor in each of designated directions of the barometric pressure sensor, and provide pressure information using pressure data of the barometric pressure sensor and the correction value.

In embodiments, a method performed by an electronic device is provided. The method may comprise determining direction information of a barometric pressure sensor of the electronic device from sensing data of an inertial sensor of the electronic device. The method may comprise determining a correction value in accordance with the direction information of the barometric pressure sensor based on pressure offset data for a sensing element of the barometric pressure sensor in each of designated directions of the barometric pressure sensor. The method may comprise providing pressure information using pressure data of the barometric pressure sensor and the correction value. The barometric pressure sensor may include a waterproof member for protecting the sensing element.

In embodiments, a non-transitory computer-readable recording medium is provided. The non-transitory computer-readable recording medium may store instructions. The instructions, when executed by a processor, may cause an electronic device to display, through the display of the electronic device, first pressure information through a first correction value in accordance with a first direction when the barometric pressure sensor faces the first direction at a designated height, and to display, through the display, second pressure information through a second correction value in accordance with a second direction when the barometric pressure sensor faces the second direction at the designated height. An angle formed between the second direction and a gravity direction may be smaller than an angle between the first direction and the gravity direction. The second correction value may indicate larger pressure magnitude than the first correction value.

In embodiments, a method performed by an electronic device is provided. The method may comprise displaying, through the display of the electronic device, first pressure information through a first correction value in accordance with a first direction when the barometric pressure sensor faces the first direction at a designated height, and displaying, through the display, second pressure information through a second correction value in accordance with a second direction when the barometric pressure sensor faces the second direction at the designated height. An angle formed between the second direction and a gravity direction may be smaller than an angle between the first direction and the gravity direction. The second correction value may indicate larger pressure magnitude than the first correction value.

### [Description of the Drawings]

With respect to the description of the drawing, the same or similar reference numerals may be used for the same or similar components.
FIG. 1 is a block diagram of an electronic device in a network environment.
FIG. 2 is an exemplary block diagram of an electronic device.
FIGS. 3A to 3C illustrate examples of a barometric pressure sensor.
FIG. 4 illustrates an operation flow of an electronic device for correcting pressure data using a pressure offset.
FIGS. 5A and 5B are perspective views of an exemplary electronic device.
FIG. 6 is an exploded perspective view of an exemplary electronic device.
FIG. 7 illustrates an example of an electronic device including a barometric pressure sensor and an inertial sensor.
FIGS. 8A and 8B illustrate examples of pressure data in accordance with a fall of an electronic device.
FIG. 8C illustrates an example of a barometric pressure measurement result.
FIG. 8D illustrates an example of an accuracy shift of measured pressure in accordance with a degree of rotation of a barometric pressure sensor.
FIG. 9A illustrates an operation flow of a device for measuring pressure offset data of a barometric pressure sensor.
FIG. 9B illustrates an example of a test board for pressure offset data.
FIGS. 10A, 10B, and 10C illustrate examples of a measurement environment of pressure offset data.
FIG. 11 illustrates an operation flow of an electronic device for determining direction information of a barometric pressure sensor.
FIG. 12 illustrates an example of a change in accuracy of measured pressure in accordance with a degree of rotation of a barometric pressure sensor.
FIG. 13 illustrates an operation flow of an electronic device for determining direction information of an inertial sensor.
FIG. 14 illustrates an operation flow of an electronic device for providing pressure information by using pressure offset data.
FIG. 15 illustrates an example of a barometric pressure measurement result.
FIG. 16 illustrates an example of a wearable device.
FIG. 17 illustrates an example of a wearable device.
FIG. 18A illustrates an example of a perspective view of a wearable device.
FIG. 18B illustrates an example of one or more hardware components disposed in a wearable device.
FIGS. 19A to 19B illustrate an example of an exterior of a wearable device.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., signal, information, message, signaling), a term referring to circuitry (e.g., circuitry, integrated circuit (IC), chip, module, component, portion, electronic circuitry, control circuitry, sensing circuitry, sensor circuitry), a terms referring to a member (e.g., adhesive member, gel, waterproof member, connection member, adhesive), a term for a computation state (e.g., step, operation, procedure, computation, calculation), a term referring to data (e.g., information, bit, symbol, packet), a term referring to network entities, and a term referring to a component of a device, which are used in the following description, are exemplified for convenience of description. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

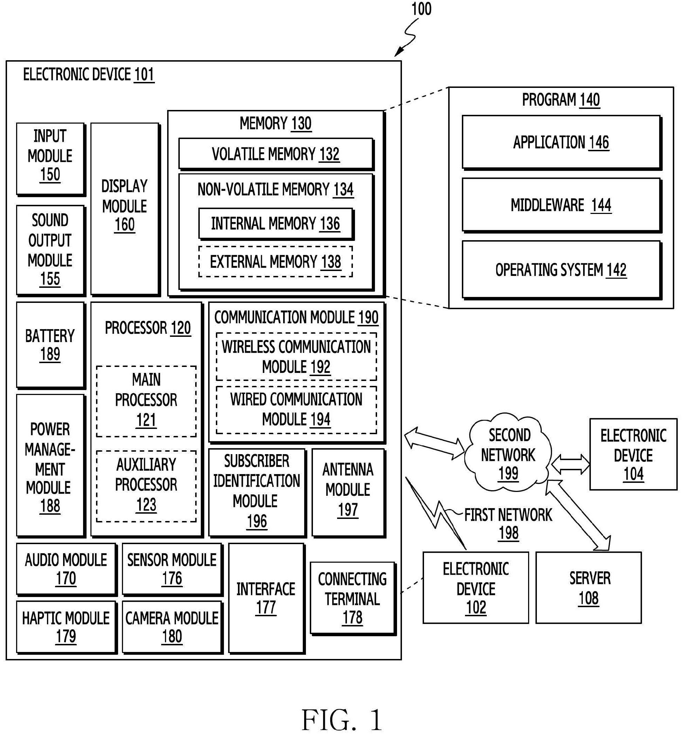

FIG. 1 is a block diagram of an electronic device in a network environment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

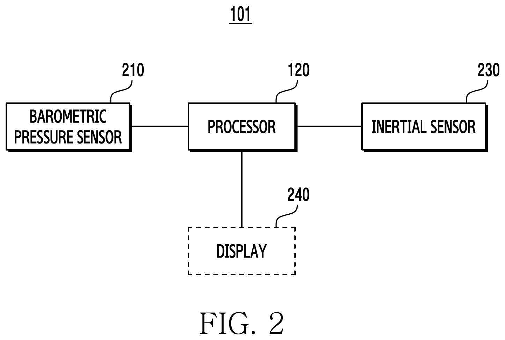

FIG. 2 is an exemplary block diagram of an electronic device (e.g., the electronic device 101).

Referring to FIG. 2, the electronic device 101 may include a processor 120, a barometric pressure sensor 210, an inertial sensor 230, and/or a display 240. The processor 120 may control overall operations of the electronic device 101. For example, the processor 120 may obtain pre-stored information (e.g., pressure offset data described later) from the barometric pressure sensor 210. For example, the processor 120 may obtain pressure data measured by the barometric pressure sensor 210. For example, the processor 120 may obtain sensing data measured by the inertial sensor 230. The processor 120 may calculate a correction value by using the pressure offset data and the sensing data. The processor 120 may correct the pressure data by using the calculated correction value. For example, the processor 120 may provide a user with the measured pressure data or the corrected pressure data through an external output module (e.g., the display module 160, or the audio module 170).

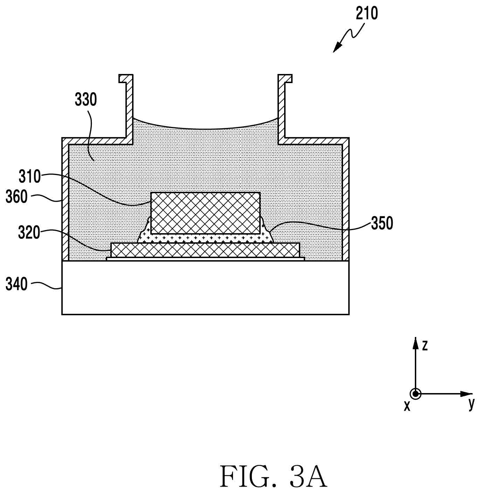

The barometric pressure sensor 210 may include circuitry for measuring pressure. The barometric pressure sensor 210 may include a sensing element. The barometric pressure sensor 210 may measure pressure applied to the sensing element. The barometric pressure sensor 210 may provide the processor 120 with pressure data obtained by the measurement. According to an embodiment, the barometric pressure sensor 210 may have a waterproof structure. The barometric pressure sensor 210 may include a waterproof member disposed inside the barometric pressure sensor 210. Due to the waterproof member, the barometric pressure sensor 210 may measure, through the sensing element, pressure caused by the waterproof member in addition to atmospheric pressure. Hereinafter, in the present disclosure, the barometric pressure sensor 210 indicates a component capable of measuring not only barometric pressure but also pressure caused by water pressure or other elements (e.g., a waterproof member described later). The barometric pressure sensor 210 may include a waterproof member. Detailed descriptions regarding the barometric pressure sensor 210 will be described through FIGS. 3A to 3C.

The inertial sensor 230 may include circuitry for measuring a posture or a movement of the electronic device 101. The inertial sensor 230 may be used to identify a movement of the electronic device 101 in three dimensions by measuring acceleration and rotation (or inertia). Sensing data obtained through the inertial sensor 230 may be provided to the electronic device 101 (e.g., the processor 120). The processor 120 may perform operations in accordance with a movement of the electronic device 101. The inertial sensor 230 may include an acceleration sensor and/or a gyro sensor. For example, the inertial sensor 230 may include a three-axis acceleration sensor. The three-axis acceleration sensor indicates a sensor for detecting a movement or inducing a response in accordance therewith by measuring an acceleration value on each of an x-axis, a y-axis, and a z-axis. As an example, the electronic device 101 may determine whether the electronic device 101 is tilted and/or a tilted angle through the sensing data of the inertial sensor 230. For example, the inertial sensor 230 may include a six-axis gyro acceleration sensor. A gyroscope of the six-axis gyro acceleration sensor may be configured to measure a degree of rotation as a rotational inertia moment by using a Coriolis effect. The inertial sensor 230 may detect rotation of the electronic device 101 and/or determine a degree of rotation. As an example, in a case that the electronic device 101 is a wearable device such as a wristwatch, the inertial sensor 230 may measure a degree of rotation of a wrist. For another example, in a case that the electronic device 101 is a wearable device such as augmented reality (AR) glasses, the inertial sensor 230 may measure a degree of rotation of a head of the user. Hereinafter, in the present disclosure, an example in which the inertial sensor 230 calculates acceleration on each axis and measures a rotation angle with respect to each axis is described, however, such examples are not interpreted as limiting other embodiments of the present disclosure. Functions of the inertial sensor 230 being divided and performed by two separate sensors (e.g., the acceleration sensor and the gyro sensor) may also be understood as an embodiment of the present disclosure.

The display 240 (e.g., the display module 160) may visually provide information (e.g., pressure information) to an outside (e.g., the user) of the electronic device 101. For example, the display 240 may provide the user with pressure information in accordance with a current location (e.g., an altitude, a direction) of the electronic device 101. In FIG. 2, the display 240 is illustrated as an output module of the electronic device 101 for providing the user with the pressure information, however, embodiments of the present disclosure are not limited thereto. According to an embodiment, the electronic device 101 may not include the display 240. For example, the electronic device 101 may provide the user with a measured and/or corrected pressure value through another output module (e.g., the audio module 170 for sound, the haptic module 179 for tactile feedback). In addition, for example, the electronic device 101 may provide the measured and/or corrected pressure value to another device (e.g., an electronic device 102, an electronic device 104, or a server 108) through a communication module 190.

FIGS. 3A to 3C illustrate examples of a barometric pressure sensor (e.g., the barometric pressure sensor 210). In FIGS. 3A to 3C, examples of the barometric pressure sensor including a waterproof member are described. The barometric pressure sensor may be electrically connected to a processor (e.g., the processor 120) of an electronic device 101 by being disposed on a printed circuit board (PCB) and/or a flexible PCB (FPCB).

Referring to FIG. 3A, the barometric pressure sensor 210 may include a sensing element 310, operation circuitry 320, a waterproof member 330, a substrate 340, an adhesive member 350, and/or a housing 360. A sensor package may be disposed over (disposed on) the substrate 340. For example, the operation circuitry 320 may be disposed over (disposed on) the substrate 340. The operation circuitry 320 may be connected to the sensing element 310 through the adhesive member 350. The housing 360 indicates a barrel for accommodating the sensing element 310, the operation circuitry 320, the waterproof member 330, and the adhesive member 350. The housing 360 may include an inlet portion used as a passage of a medium (e.g., water, or air) for pressure measurement of the barometric pressure sensor 210.

The sensing element 310 may have a pressure sensing surface. For example, the sensing element 310 may include a micro electro mechanical systems (MEMS) sensor. The barometric pressure sensor 210 may measure pressure applied to the pressure sensing surface of the sensing element 310. A membrane of the pressure sensing surface may be bent as much as the pressure is applied. A resistance or a capacitance may change in accordance with a degree to which the membrane of the pressure sensing surface is bent. By using a degree to which the resistance or the capacitance changes, the sensing element 310 may measure the pressure.

The operation circuitry 320 may obtain a measurement result (hereinafter, pressure data) of the sensing element 310 from the sensing element 310. The operation circuit 320 may provide the processor 120 with an output signal corresponding to the pressure data. For example, the operation circuitry 320 may include an application specific integrated circuit (ASIC). According to an embodiment, the operation circuitry 320 may store data through an internal storage space (e.g., memory). For example, the operation circuitry 320 may store prior data required for correction of the pressure data in accordance with a posture of the electronic device 101. As an example, the operation circuitry 320 may store pressure offset data for each posture of the electronic device 101. As an example, the operation circuitry 320 may store internal disposition parameters (e.g., an angular difference between a disposition of the barometric pressure sensor 210 and a disposition of the inertial sensor 230).

The barometric pressure sensor 210 may have a waterproof structure. The barometric pressure sensor 210 may include the waterproof member 330. The waterproof member 330 may be used to protect the sensing element 310 and the operation circuitry 320. The waterproof member 330 may be disposed to cover the sensing element 310 and the operation circuitry 320 within the barometric pressure sensor 210. For example, the waterproof member may include a gel. The gel is relatively fluid compared to a solid. The gel may be applied to protect a component vulnerable to internal moisture or humidity, such as the sensing element 310 (e.g., MEMS) and the operation circuitry 320 (e.g., ASIC). A weight of the waterproof member 330 may act as pressure on the sensing element 310 due to gravity. The barometric pressure sensor 210 may measure pressure data in which both pressure applied to the sensing element 310 through a medium (e.g., air, or water) and pressure applied to the sensing element 310 through the waterproof member 330 are considered. In accordance with a direction (e.g., a direction in which the pressure sensing surface of the sensing element 310 faces) of the barometric pressure sensor 210, pressure applied by the waterproof member 330 to the sensing element 310 may change due to an influence of the gravity. If the pressure caused by the waterproof member 330 is not corrected whenever the direction of the barometric pressure sensor 210 changes, an error may be caused in pressure data of the electronic device 101 and height information (e.g., altitude, or water depth) of the electronic device 101. For example, an error of approximately 0.1 to 0.2 hPa may indicate an altitude difference of approximately 80 cm to 160 cm. Such an error may cause malfunction of the electronic device 101 in a situation requiring accurate altitude (e.g., ball sports, fitness, Pilates). Accordingly, the electronic device 101 according to embodiments of the present disclosure may be configured to calculate a degree of distortion of pressure in accordance with a direction of the barometric pressure sensor 210 and to compensate pressure data of the barometric pressure sensor 210 in order to reduce an influence caused by the waterproof member 330.

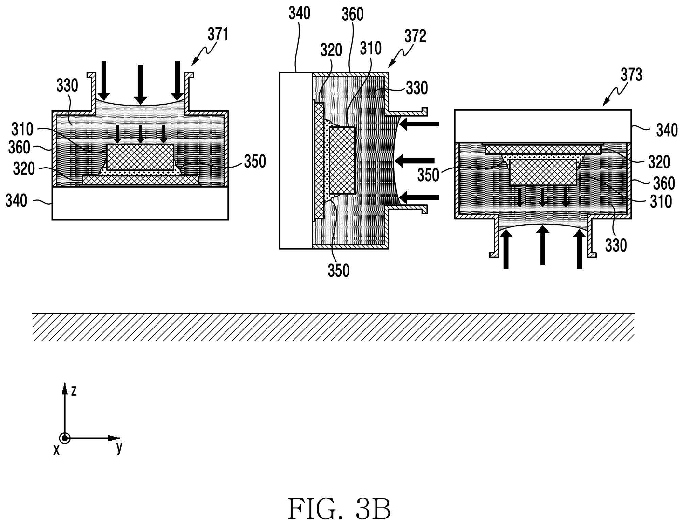

Referring to FIG. 3B, pressure for each posture of the electronic device 101 located on a ground is illustrated. The electronic device 101 may include the barometric pressure sensor 210. For example, in a first posture 371, direction information of the barometric pressure sensor 210 may indicate that the pressure sensing surface of the sensing element 310 has approximately a 0-degree difference from the ground. In other words, a direction in which the pressure sensing surface faces and a direction in which the ground faces may be substantially identical. Since atmospheric pressure acts from an outside of the barometric pressure sensor 210 to an inside of the barometric pressure sensor 210, the atmospheric pressure may act in a direction (e.g., a -z-axis direction) toward the ground through the inlet portion of the housing 360. In accordance with the gravity, pressure in which the weight of the waterproof member 330 presses the sensing element 310 may also act in the direction (e.g., the -z-axis direction) toward the ground. As an example, since the pressure caused by the waterproof member 330 and the atmospheric pressure are substantially in the same direction, pressure measured by the barometric pressure sensor 210 may be measured to be higher than the atmospheric pressure in accordance with an actual altitude.

For example, in a second posture 372, direction information of the barometric pressure sensor 210 may indicate that the pressure sensing surface of the sensing element 310 has approximately a 90-degree difference from the ground. In other words, a difference between a direction in which the pressure sensing surface faces and a direction in which the ground faces may be approximately 90 degrees. Since the atmospheric pressure acts from the outside of the barometric pressure sensor 210 to the inside of the barometric pressure sensor 210, the atmospheric pressure may act, through the inlet portion of the housing 360, in a direction (e.g., a -y-axis direction) toward the pressure sensing surface of the sensing element 310 of the barometric pressure sensor 210 from the outside. A gravity direction and a direction in which the pressure sensing surface of the sensing element 310 faces may be substantially perpendicular. Accordingly, pressure applied to the pressure sensing surface of the sensing element 310 due to the waterproof member 330 may be smaller than corresponding pressure in other postures (e.g., the first posture 371 and a third posture 373).

For example, in the third posture 373, direction information of the barometric pressure sensor 210 may indicate that the pressure sensing surface of the sensing element 310 has approximately a 180-degree difference from the ground. In other words, a difference between a direction in which the pressure sensing surface faces and a direction in which the ground faces may be approximately 180 degrees. Since the atmospheric pressure acts from the outside of the barometric pressure sensor 210 to the inside of the barometric pressure sensor 210, the atmospheric pressure may act, through the inlet portion of the housing 360, in a direction (e.g., a +z-axis direction) toward the pressure sensing surface of the sensing element 310 of the barometric pressure sensor 210 from the outside. The gravity may act in a direction opposite to the pressure sensing surface of the sensing element 310. In accordance with the gravity, the weight of the waterproof member 330 may at least partially offset the atmospheric pressure applied to the sensing element 310. As an example, since a direction of the pressure caused by the waterproof member 330 and a direction of atmospheric pressure are substantially opposite to each other, pressure measured by the barometric pressure sensor 210 may be measured to be lower than the atmospheric pressure in accordance with the actual altitude.

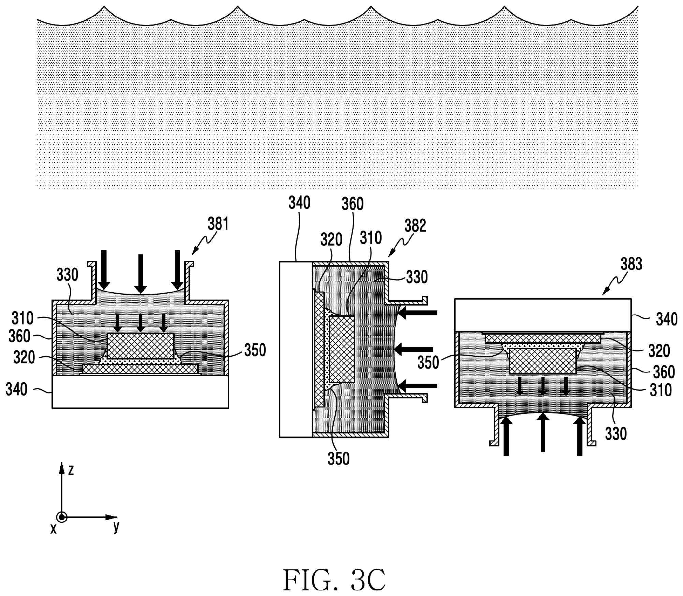

Referring to FIG. 3C, pressure for each posture of the electronic device 101 located below a water surface is illustrated. The electronic device 101 may include the barometric pressure sensor 210. The barometric pressure sensor 210 may be used to measure water pressure in accordance with a water depth below a water surface. For example, in a first posture 381, direction information of the barometric pressure sensor 210 may indicate that a direction in which the pressure sensing surface of the sensing element 310 faces and a gravity direction have approximately a 0-degree difference. In other words, below the water surface, a direction of the water pressure and a direction in which the pressure sensing surface faces may be substantially identical. Since the water pressure acts from the outside of the barometric pressure sensor 210 to the inside of the barometric pressure sensor 210, the water pressure may act, through the inlet portion of the housing 360, in the direction (e.g., the -z-axis direction) toward the ground. In accordance with the gravity, pressure in which the weight of the waterproof member 330 presses the sensing element 310 may also act in the gravity direction (e.g., the -z-axis direction). As an example, since the pressure caused by the waterproof member 330 and the water pressure are substantially in the same direction, the pressure measured by the barometric pressure sensor 201 may be measured to be higher than pressure in accordance with an actual water depth.

For example, in a second posture 382, direction information of the barometric pressure sensor 210 may indicate that a direction in which the pressure sensing surface of the sensing element 310 faces and the gravity direction have approximately a 90-degree difference. In other words, below the water surface, a difference between a direction of the water pressure and a direction in which the pressure sensing surface faces may be approximately 90 degrees. Since the water pressure acts from the outside of the barometric pressure sensor 210 to the inside of the barometric pressure sensor 210, the water pressure may act, through the inlet portion of the housing 360, in a direction (e.g., the -y-axis direction) toward the pressure sensing surface of the sensing element 310 of the barometric pressure sensor 210 from the outside. The gravity direction and the direction in which the pressure sensing surface of the sensing element 310 faces may be substantially perpendicular. Accordingly, pressure applied to the pressure sensing surface of the sensing element 310 due to the waterproof member 330 may be smaller than corresponding pressure in other postures (e.g., the first posture 381 and a third posture 383).

For example, in the third posture 383, direction information of the barometric pressure sensor 210 may indicate that a direction in which the pressure sensing surface of the sensing element 310 faces and the gravity direction have approximately a 180-degree difference. In other words, below the water surface, a direction of the water pressure may be opposite to a direction in which the pressure sensing surface faces. Since the water pressure acts from the outside of the barometric pressure sensor 210 to the inside of the barometric pressure sensor 210, the water pressure may act, through the inlet portion of the housing 360, in the direction (e.g., the +z-axis direction) toward the pressure sensing surface of the sensing element 310 of the barometric pressure sensor 210 from the outside. The gravity may act in the direction opposite to the pressure sensing surface of the sensing element 310. In accordance with the gravity, the weight of the waterproof member 330 may at least partially offset the water pressure applied to the sensing element 310. As an example, since the direction of pressure caused by the waterproof member 330 and the direction of the water pressure are substantially opposite to each other, pressure measured by the barometric pressure sensor 210 may be measured to be lower than the pressure in accordance with the actual water depth.

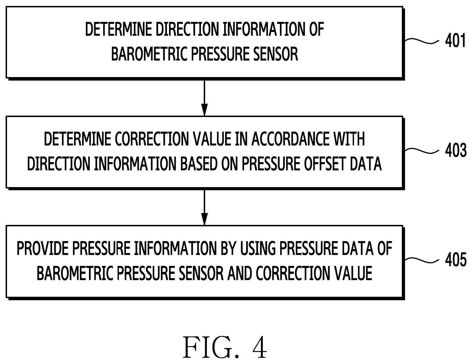

FIG. 4 illustrates an operation flow of an electronic device (e.g., the electronic device 101) for correcting pressure data using a pressure offset. As described through FIGS. 3A to 3C, since an influence of a waterproof member 330 on a pressure sensing surface is different in accordance with direction information (e.g., a direction of the pressure sensing surface of a sensing element 310) of a barometric pressure sensor 210, the electronic device 101 may correct pressure data of the barometric pressure sensor 210 in accordance with the direction information of the barometric pressure sensor 210.

In the following embodiment, each operation may be performed sequentially, but is not necessarily performed sequentially. For example, an order of each operation may be changed, and at least two operations may be performed in parallel.

Referring to FIG. 4, in operation 401, according to an embodiment, the electronic device 101 (e.g., the processor 120) may determine direction information of the barometric pressure sensor 210. The electronic device 101 may obtain sensing data by using an inertial sensor 230. The electronic device 101 may determine direction information of the inertial sensor 230 by using the sensing data. The direction information may indicate a direction of a surface on which the inertial sensor 230 is disposed (e.g., a surface on which the inertial sensor 230 is mounted in an FPCB). The direction information may include a tilting angle (which may be referred to as an incline of the electronic device 101) indicating how much the electronic device 101 is tilted. The electronic device 101 may obtain a difference (hereinafter, an angular difference) between a direction of the inertial sensor 230 and a direction of the barometric pressure sensor 210, and for example, the angular difference may be pre-stored in a component (e.g., the barometric pressure sensor 210), determined by a preset of the electronic device 101, and/or obtained by an external user input. The electronic device 101 may determine the direction information of the barometric pressure sensor 210 by using the angular difference and the direction information of the inertial sensor 230. For example, if the inertial sensor 230 and the barometric pressure sensor 210 face substantially the same direction, since the angular difference is approximately 0 degrees, the electronic device 101 may determine the direction information obtained through the inertial sensor 230 as the direction information of the barometric pressure sensor 210. For another example, if the inertial sensor 230 and the barometric pressure sensor 210 face opposite directions, since the angular difference is approximately 180 degrees, the electronic device 101 may determine a direction opposite to the direction information obtained through the inertial sensor 230 as the direction information of the barometric pressure sensor 210. The direction information of the barometric pressure sensor 210 may indicate how much the pressure sensing surface of the sensing element 310 of the barometric pressure sensor 210 is tilted relative to the ground. That is, the direction information may indicate a difference between a direction in which the pressure sensing surface faces and a gravity direction.

In operation 403, according to an embodiment, the electronic device 101 (e.g., the processor 120) may determine a correction value in accordance with the direction information of the barometric pressure sensor 210 based on pressure offset data. The electronic device 101 may obtain the pressure offset data. The pressure offset data indicates a difference between a pressure value of the sensing element 310 in a case that the waterproof member 330 is not included and a pressure value of the sensing element 310 in a case that the waterproof member 330 is included. Since an influence of pressure caused by the waterproof member 330 is different in accordance with a direction in which the barometric pressure sensor 210 is disposed, the electronic device 101 may obtain pressure offset data for the sensing element 310 in each of designated directions (e.g., a direction of the pressure sensing surface in a first posture 371, a direction of the pressure sensing surface in a second posture 372, and a direction of the pressure sensing surface in a third posture 373) of the barometric pressure sensor 210. For example, the pressure offset data for the sensing element 310 may be stored inside the barometric pressure sensor 210. As an example, the processor 120 may obtain the pressure offset data from memory of an ASIC of the barometric pressure sensor 210.

The electronic device 101 may determine an operation scheme for pressure correction by using the pressure offset data. The operation scheme may indicate a correction value for each direction of the barometric pressure sensor 210. For example, the operation scheme may be a polynomial having a direction of the barometric pressure sensor 210 as a variable. The electronic device 101 may determine coefficients of the polynomial by using the pressure offset data. As an example, the electronic device 101 may determine coefficients of each of terms of a quadratic equation for the pressure correction by using pressure offset data in a case that a direction of the barometric pressure sensor 210 is approximately 0 degrees relative to the ground, pressure offset data in a case that a direction of the barometric pressure sensor 210 is approximately 90 degrees relative to the ground, and pressure offset data in a case that a direction of the barometric pressure sensor 210 is approximately 180 degrees relative to the ground. The electronic device 101 may determine a correction value by using the direction information of the barometric pressure sensor 210 in the operation 401 in the determined operation scheme. The electronic device 101 may determine a correction value in accordance with a posture of the electronic device 101. The posture may indicate a degree or a state in which the electronic device 101 is tilted. In accordance with the posture of the electronic device 101, the direction information (e.g., the direction in which the pressure sensing surface faces) of the barometric pressure sensor 210 of the electronic device 101 may be different. The electronic device 101 may determine a correction value corresponding to the direction information of the barometric pressure sensor 210 in the operation 401.

In operation 405, according to an embodiment, the electronic device 101 (e.g., the processor 120) may provide pressure information by using the pressure data of the barometric pressure sensor 210 and the correction value. The electronic device 101 may measure the pressure data of the barometric pressure sensor 210. Since the measured pressure data is a result in which not only atmospheric pressure but also pressure caused by a weight of the waterproof member 330 is reflected, the electronic device 101 may obtain pressure (e.g., atmospheric pressure, or water pressure) actually applied to the barometric pressure sensor 210 through the correction value. The electronic device 101 may provide corrected pressure data as the pressure information through the pressure data and the correction value. For example, the pressure information may be provided to a user of the electronic device 101. As an example, an altitude or a water depth corresponding to the pressure information may be displayed through a display 240 of the electronic device 101. For another example, in a case that the altitude corresponding to the pressure information is equal to or greater than a threshold value, a separate notification (e.g., vibration) may be provided to the user. As still another example, the altitude or the water depth corresponding to the pressure information may be output as a voice signal through a speaker of the electronic device 101 or a separate device (e.g., wireless earphones). For another example, the pressure information may be provided to another device (e.g., the electronic device 102, the electronic device 104, or the server 108).

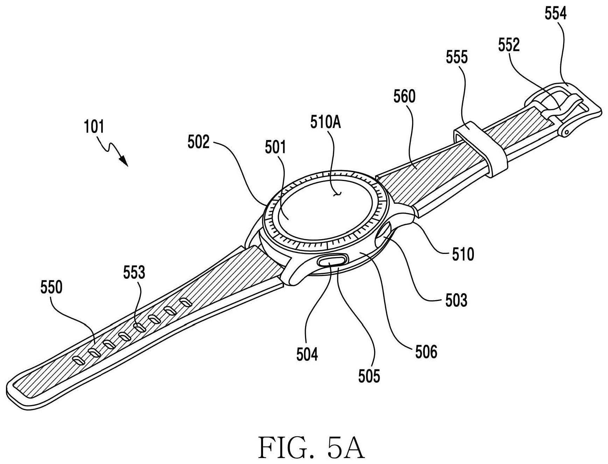

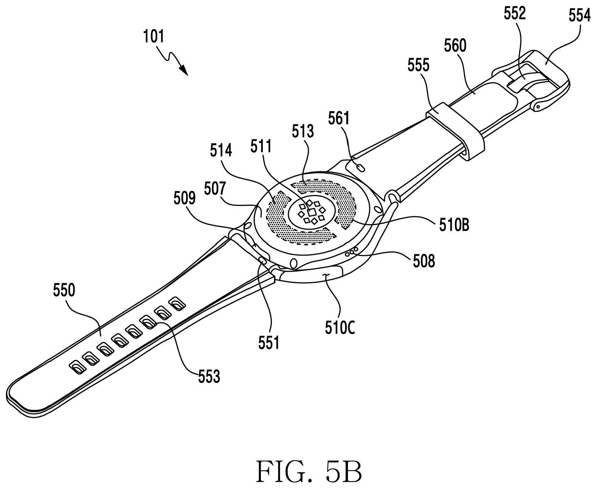

FIGS. 5A and 5B are perspective views of an exemplary electronic device (e.g., the electronic device 101).

Referring to FIGS. 5A and 5B, the electronic device 101 may include a housing 510 including a first surface (or a front surface) 510A, a second surface (or a rear surface) 510B, and a side surface 510C surrounding a space between at least a portion of the first surface 510A and the second surface 510B, and a fastening member 550 or 560 connected to at least a portion of the housing 510 and configured to detachably fasten the electronic device 101 to a body part (e.g., a wrist, an ankle, a head, a neck, an arm, a waist, or a leg) of a user. In an embodiment (not illustrated), the housing may refer to a structure forming a portion of the first surface 510A, the second surface 510B, and the side surfaces 510C of FIG. 5A. According to an embodiment, the first surface 510A may be formed by a front plate 501 (e.g., a glass plate or a polymer plate including various coating layers) in which at least a portion is substantially transparent. The second surface 510B may be implemented by a rear plate 507 that is substantially opaque. The rear plate 507 may be implemented by, for example, coated or colored glass, ceramic, polymer, metal (e.g., aluminum, stainless steel (STS), or magnesium), or a combination of at least two of the materials. The side surface 510C may be formed by a side bezel structure (or a "side member") 506 coupled with the front plate 501 and the rear plate 507 and including metal and/or polymer. In some embodiments, the rear plate 507 and the side bezel structure 506 may be integrally formed and may include the same material (e.g., a metal material such as aluminum). The fastening member 550 or 560 may be formed in various materials and shapes. The fastening member 550 or 560 may be formed of a woven material, leather, rubber, urethane, metal, ceramic, or a combination of at least two of the materials.

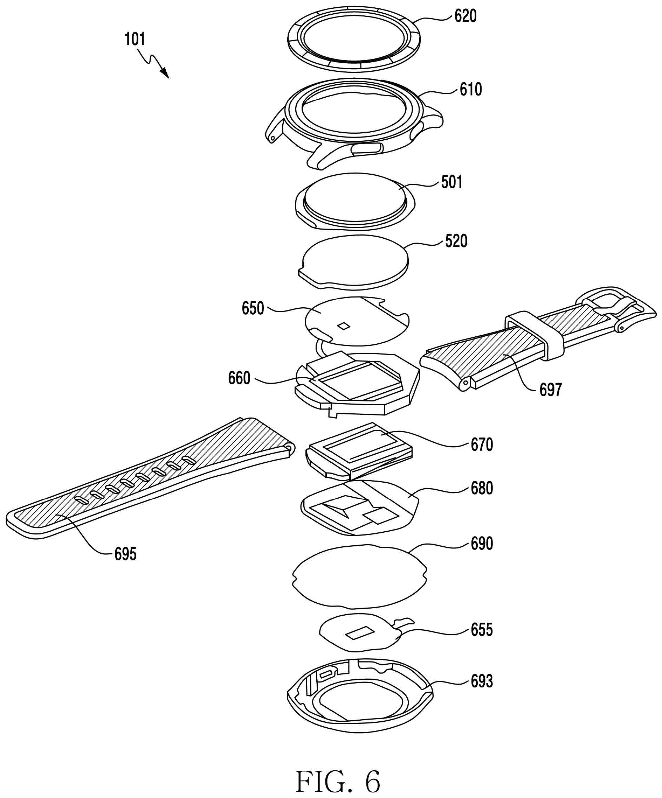

According to an embodiment, the electronic device 101 may include at least one of a display 520 (see FIG. 6) (e.g., the display 240), an audio module 505 and 508, a sensor module 511, key input devices 502, 503, and 504, and a connector hole 509. In some embodiments, the electronic device 101 may omit at least one (e.g., the key input devices 502, 503, and 504, the connector hole 509, or the sensor module 511) of components or may additionally include another component.

For example, the display 520 may be exposed through a substantial portion of the front plate 501. A shape of the display 520 may correspond to a shape of the front plate 501 and may have various shapes such as a circular shape, an elliptical shape, or a polygonal shape. The display 520 may be coupled with or disposed adjacent to touch sensing circuitry, a pressure sensor capable of measuring a strength (pressure) of a touch, and/or a fingerprint sensor.

The audio module 505 and 508 may include the microphone hole 505 and the speaker hole 508. A microphone for obtaining external sound may be disposed inside the microphone hole 505, and in some embodiments, a plurality of microphones may be disposed to detect a direction of sound. The speaker hole 508 may be used as an external speaker and a receiver for a call. In some embodiments, the speaker hole 508 and the microphone hole 505 may be implemented as one hole, or a speaker may be included without the speaker hole 508 (e.g., a piezo speaker).

The sensor module 511 may generate an electrical signal or a data value corresponding to an internal operating state of the electronic device 101 or an external environmental state. The sensor module 511 may include, for example, a biometric sensor module 511 (e.g., a heart rate monitor (HRM) sensor) disposed on the second surface 510B of the housing 510. The electronic device 101 may further include at least one of a sensor module not illustrated, for example, a gesture sensor, a gyro sensor (e.g., the inertial sensor 230), a barometric pressure sensor (e.g., the barometric pressure sensor 210), a magnetic sensor, an acceleration sensor (e.g., the inertial sensor 230), a grip sensor, a color sensor, an infrared (IR) sensor, a biometric sensor, a temperature sensor, a humidity sensor, or an illuminance sensor.

The sensor module 511 may include electrode regions 513 and 514 forming a portion of a surface of the electronic device 101 and biometric signal detection circuitry (not illustrated) electrically connected to the electrode regions 513 and 514. For example, the electrode regions 513 and 514 may include the first electrode region 513 and the second electrode region 514 disposed on the second surface 510B of the housing 510. The sensor module 511 may be configured such that the electrode regions 513 and 514 obtain an electrical signal from a body part of the user, and the biometric signal detection circuitry detects biometric information of the user based on the electrical signal.

The key input device 502, 503, and 504 may include the wheel key 502 disposed on the first surface 510A of the housing 510 and rotatable in at least one direction, and/or the side key buttons 503 and 504 disposed on the side surface 510C of the housing 510. The wheel key may have a shape corresponding to the shape of the front plate 501. In an embodiment, the electronic device 101 may not include some or all of the above-mentioned key input device 502, 503, and 504, and the key input device 502, 503, or 504 that is not included may be implemented in another form such as a soft key on the display 520. The connector hole 509 may accommodate a connector (e.g., a USB connector) for transmitting and receiving power and/or data with an external electronic device, and may include another connector hole (not illustrated) capable of accommodating a connector for transmitting and receiving an audio signal with the external electronic device. The electronic device 101 may further include, for example, a connector cover (not illustrated) covering at least a portion of the connector hole 509 and blocking or reducing inflow of a foreign substance from outside into the connector hole.

The fastening member 550 or 560 may be detachably fastened to at least a portion of the housing 510 by using a locking member 551 or 561. The fastening member 550 or 560 may include one or more of a fixing member 552, a fixing member fastening hole 553, a band guide member 554, or a band fastening ring 555.

The fixing member 552 may be configured to fix the housing 510 and the fastening member 550 or 560 to the body part (e.g., the wrist, the ankle, the head, the neck, the arm, the waist, or the leg) of the user. The fixing member fastening hole 553 may fix the housing 510 and the fastening member 550 or 560 to the body part of the user by corresponding to the fixing member 552. The band guide member 554 may be configured to limit a range of a movement of the fixing member 552 when the fixing member 552 is fastened to the fixing member fastening hole 553, thereby allowing the fastening member 550 or 560 to be closely fastened to the body part of the user. The band fastening ring 555 may limit the range of the movement of the fastening member 550 or 560 in a state in which the fixing member 552 and the fixing member fastening hole 553 are fastened.

FIG. 6 is an exploded perspective view of an exemplary electronic device (e.g., the electronic device 101).

Referring to FIG. 6, the electronic device 101 may include a side bezel structure 610 (e.g., the side bezel structure 506 of FIG. 5A), a wheel key 620 (e.g., the wheel key 502 of FIG. 5A), a front plate 501, a display 520, a first antenna 650, a second antenna 655, a support member 660 (e.g., a bracket), a battery 670, a printed circuit board 680, a sealing member 690, a rear plate 693 (e.g., the rear plate 507 of FIG. 5B), and/or a fastening member 695 or 697 (e.g., the fastening member 550 or 560 of FIGS. 5A and/or 5B). At least one of components of the electronic device 101 described in FIG. 6 may be identical to or similar to at least one of the components of the electronic device 101 of FIG. 1, FIG. 2, FIG. 5A, and/or FIG. 5B, and a redundant description thereof will be omitted below. The support member 660 may be connected to the side bezel structure 610 by being disposed inside the electronic device 101, or may be integrally formed with the side bezel structure 610. The support member 660 may be formed of, for example, a metal material and/or a non-metal material (e.g., a polymer material). The display 520 may be coupled to a surface of the support member 660, and the printed circuit board 680 may be coupled to another surface of the support member 660.

A processor (e.g., the processor 120), memory, and/or an interface may be mounted on the printed circuit board 680. The processor 120 may include, for example, one or more of a central processing unit, an application processor, a graphic processing unit (GPU), an application processor, a sensor processor, or a communication processor. The memory may include, for example, a volatile memory or a non-volatile memory. The interface may include, for example, a high definition multimedia interface (HDMI), a universal serial bus (USB) interface, an SD card interface, and/or an audio interface. The interface may, for example, electrically or physically connect the electronic device 101 to an external electronic device, and may include a USB connector, an SD card/multimedia card (MMC) connector, or an audio connector. According to an embodiment, at least one sensor (e.g., the barometric pressure sensor 210, or the inertial sensor 230) may be electrically connected to the processor 120 of the printed circuit board 680. For example, the at least one sensor (e.g., the barometric pressure sensor 210, or the inertial sensor 230) may be disposed on a separate board (e.g., an FPCB) connected to the printed circuit board 680. For another example, the at least one sensor (e.g., the barometric pressure sensor 210, or the inertial sensor 230) may be disposed over (disposed on) the printed circuit board 680.

The battery 670 may be a device for supplying power to at least one component of the electronic device 101, and may include, for example, a non-rechargeable primary battery, a rechargeable secondary battery, or a fuel cell. At least a portion of the battery 670 may be disposed, for example, on substantially the same plane as the printed circuit board 680. The battery 670 may be integrally disposed inside the electronic device 101, or may be detachably disposed with respect to the electronic device 101.

The first antenna 650 may be disposed between the display 520 and the support member 660. The first antenna 650 may include, for example, a near field communication (NFC) antenna, a wireless charging antenna, and/or a magnetic secure transmission (MST) antenna. The first antenna 650 may perform, for example, short-range communication with an external device, transmit and receive power required for charging wirelessly, and transmit an electromagnetic signal including a short-range communication signal or payment data. In an embodiment, an antenna structure may be formed by at least a portion of the side bezel structure 610 and/or a portion of the support member 660 or a combination thereof. The second antenna 655 may be disposed between the printed circuit board 680 and the rear plate 693. The second antenna 655 may include, for example, a near field communication (NFC) antenna, a wireless charging antenna, and/or a magnetic secure transmission (MST) antenna. The second antenna 655 may perform, for example, short-range communication with the external device, transmit and receive power required for charging wirelessly, and transmit an electromagnetic signal including a short-range communication signal or payment data. In an embodiment, an antenna structure may be formed by a portion of the side bezel structure 610 and/or the rear plate 693 or a combination thereof.

The sealing member 690 may be located between the side bezel structure 610 and the rear plate 693. The sealing member 690 may be configured to block or reduce moisture and a foreign substance introduced from an outside into a space surrounded by the side bezel structure 610 and the rear plate 693.

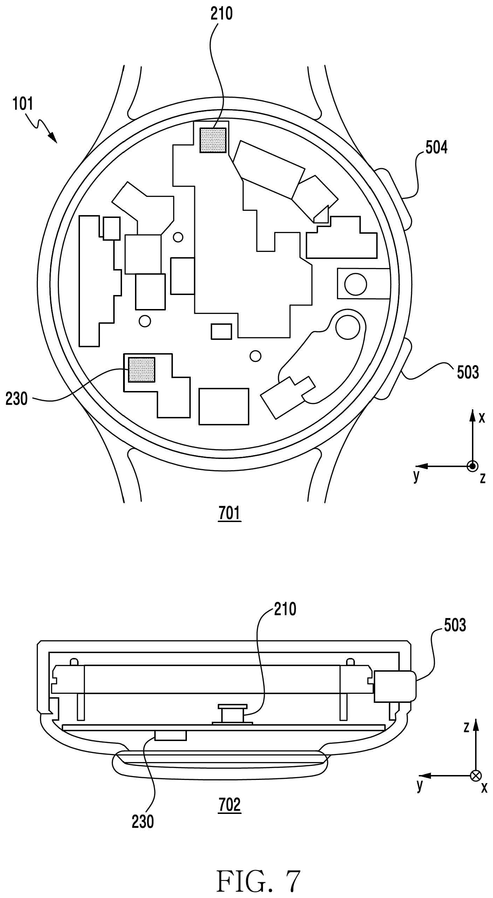

FIG. 7 illustrates an example of an electronic device (e.g., the electronic device 101) including a barometric pressure sensor (e.g., the barometric pressure sensor 210) and an inertial sensor (e.g., the inertial sensor 230). In FIG. 7, a disposition of the barometric pressure sensor 210 and the inertial sensor 230 is merely an example of a measurement environment to be described later, and is not to be interpreted as limiting embodiments of the present disclosure.

Referring to FIG. 7, the electronic device 101 may include the barometric pressure sensor 210 and the inertial sensor 230. A plan view 701 is a view in which the electronic device 101 is viewed in a direction (e.g., a -z-axis direction). A front view 702 is a view in which the electronic device 101 is viewed in another direction (e.g., a -x-axis direction). The electronic device 101 may determine a state (e.g., a rotation state, or a tilting angle) of the electronic device 101 through the inertial sensor 230. The electronic device 101 may determine direction information of the barometric pressure sensor 210 by using a difference between a disposition of the inertial sensor 230 and a disposition of the barometric pressure sensor 210, and the state of the electronic device 101. Since the direction information of the barometric pressure sensor 210 is determined through sensing data of the inertial sensor 230, for more accurate correction, for example, the barometric pressure sensor 210 and the inertial sensor 230 may be disposed on the same plane (e.g., an xy plane). As described in FIGS. 3A to 3C, distortion may occur in pressure data measured through the barometric pressure sensor 210 due to a waterproof member 330. The electronic device 101 may adjust a pressure value distorted due to the waterproof member 330 in the barometric pressure sensor 210 by using pressure offset data measured and calculated in advance.

Meanwhile, in FIG. 7, although the barometric pressure sensor 210 and the inertial sensor 230 are illustrated as being disposed on the same plane, the embodiments of the present disclosure are not limited thereto. Even when a surface on which the barometric pressure sensor 210 is disposed and a surface on which the inertial sensor 230 is disposed are different, pressure correction according to embodiments of the present disclosure may be used by reflecting an angular difference and a height difference between two sensors.

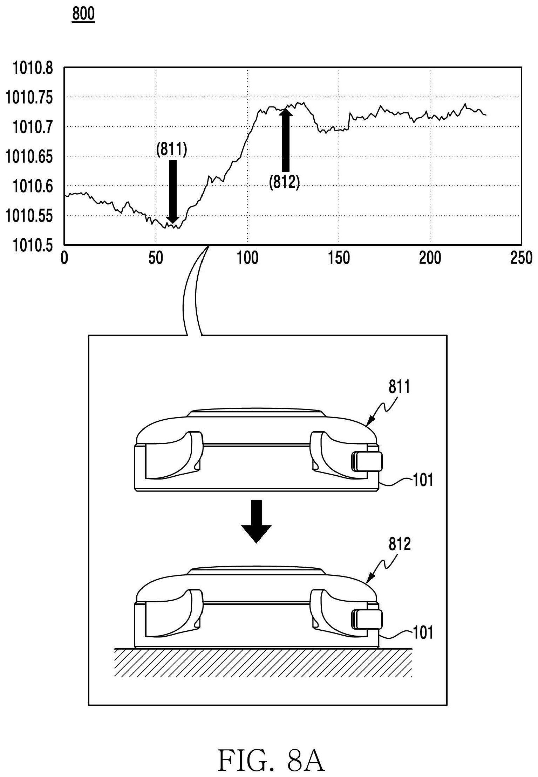

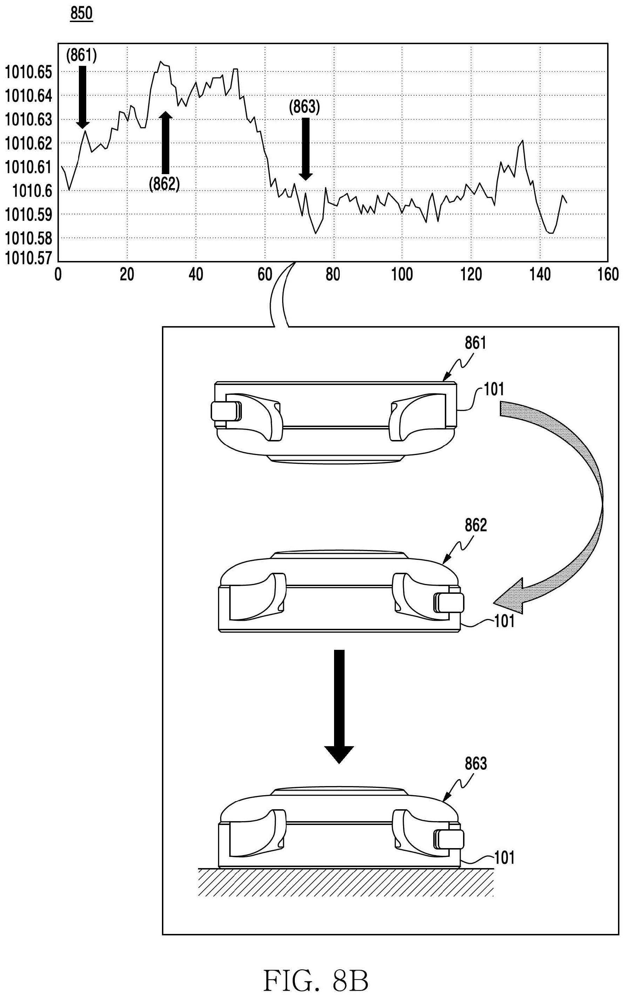

FIGS. 8A and 8B illustrate examples of pressure data in accordance with a fall of an electronic device (e.g., the electronic device 101).

Referring to FIG. 8A, a graph 800 represents a change in a pressure value measured by the electronic device 101 when the electronic device 101 falls from a predetermined height from a ground without a change in direction. A horizontal axis of the graph 800 represents time (unit: sample index), and a vertical axis of the graph 800 represents pressure (unit: hectopascal (hPa)). Due to the fall of the electronic device 101, as the electronic device 101 becomes closer to the ground, atmospheric pressure received by the electronic device 101 increases. For example, at a first point 811, the fall of the electronic device 101 may be initiated. At a second point 812, the electronic device 101 may contact the ground. Referring to the graph 800, it may be identified that actual atmospheric pressure increases as an altitude of the electronic device 101 decreases. Referring to sample indexes from approximately 60 to approximately 100 of the graph 800, it may be identified that pressure measured by the electronic device 101 gradually increases.

Referring to FIG. 8B, a graph 850 represents a change in a pressure value measured by the electronic device 101 when the electronic device 101 falls from the predetermined height from the ground with a direction being changed. A horizontal axis of the graph 850 represents time (unit: sample index), and a vertical axis of the graph 850 represents pressure (unit: hPa). Due to the fall of the electronic device 101, as the electronic device 101 becomes closer to the ground, atmospheric pressure received by the electronic device 101 increases. However, as the electronic device 101 is flipped, a direction of the barometric pressure sensor 210 of the electronic device 101 may be changed. For example, as in the third posture 373 of FIG. 3B, a direction in which a pressure sensing surface of a sensing element 310 of the barometric pressure sensor 210 faces may be opposite to a direction in which the atmospheric pressure faces. For example, at a first point 861, the fall of the electronic device 101 may be initiated. At a second point 862, the electronic device 101 may be flipped. At a third point 863, the electronic device 101 may contact the ground. Referring to the graph 850, although actual atmospheric pressure should increase due to a decrease in an altitude of the electronic device 101, it may be identified that pressure measured by the electronic device 101 decreases.

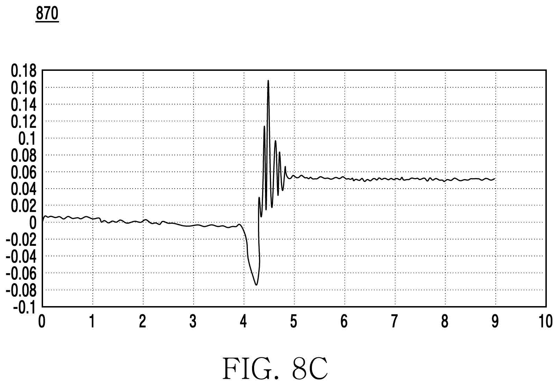

FIG. 8C illustrates an example of a barometric pressure measurement result. In FIG. 8C, a test result in accordance with a fall of a single component (e.g., the barometric pressure sensor 210) of the electronic device 101 is illustrated.

Referring to FIG. 8C, a graph 870 represents a normalized value of a test pressure value in accordance with time. A horizontal axis of the graph 870 represents time (unit: second), and a vertical axis of the graph 870 represents a normalized test pressure value (unit: hPa). Due to a change in an altitude of the electronic device 101, it may be identified that the test pressure value increases in a section of approximately 4 to 5 seconds compared to other time sections. Although pressure should increase as the altitude decreases, a result different from an expectation is derived in the graph 850. In the graph 850 of FIG. 8B, it is because the changed influence is not reflected although pressure caused by the waterproof member 330 is changed due to a change in a direction of the electronic device 101. The change in the direction of the electronic device 101 causes a result in which pressure measured by the electronic device 101 becomes different from the actual atmospheric pressure.

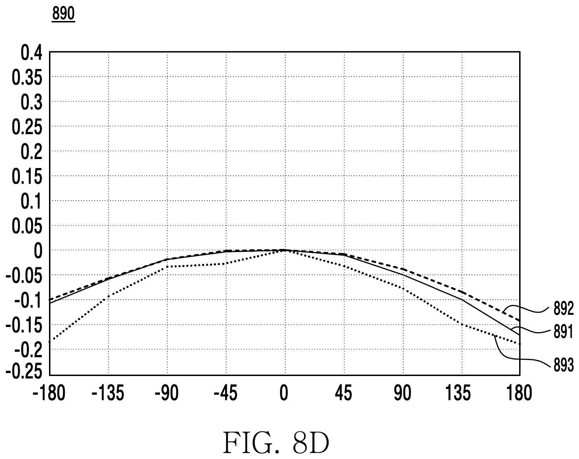

FIG. 8D illustrates an example of an accuracy shift of measured pressure in accordance with a degree of rotation of a barometric pressure sensor (e.g., the barometric pressure sensor 210).

Referring to FIG. 8D, a graph 890 represents a change in accuracy in accordance with a degree of rotation. A horizontal axis of the graph 890 represents a degree of rotation (e.g., a roll angle) (unit: degree), and a vertical axis of the graph 890 represents an accuracy shift (unit: hPa). The degree of rotation may indicate how much a direction in which the barometric pressure sensor 210 of the electronic device 101 faces is rotated with respect to a reference direction. As an example, the reference direction may indicate a direction in which the ground faces (in other words, a direction opposite to a gravity direction). In the first posture 371 of FIG. 3B or the first posture 381 of FIG. 3C, the degree of rotation may be approximately 0 degrees. For example, the electronic device 101 may be a watch-type wearable device worn on a wrist of a user. With a direction from an arm to a hand of the user as a rotation axis, the electronic device 101 may rotate. The accuracy shift may indicate a difference between the actual atmospheric pressure at a corresponding altitude and pressure measured through the barometric pressure sensor 210. That is, the accuracy shift may indicate a correction value for measured pressure of the sensing element 310.

Referring to the graph 890, it may be identified that a correction value changes in a certain manner in accordance with a degree of rotation of the electronic device 101. For example, a first line 891 represents an accuracy shift in accordance with a first sample. The first line 891 has a value of approximately -0.17 at approximately 180 degrees, has a value of approximately -0.1012 at approximately 135 degrees, has a value of approximately -0.05 at approximately 90 degrees, has a value of approximately -0.0162 at approximately 45 degrees, and has a value of approximately 0 at approximately 0 degrees. For example, a second line 892 represents an accuracy shift in accordance with a second sample. The second line 892 has a value of approximately -0.14 at approximately 180 degrees, has a value of approximately -0.0825 at approximately 135 degrees, has a value of approximately -0.04 at approximately 90 degrees, has a value of approximately -0.0125 at approximately 45 degrees, and has a value of approximately 0 at approximately 0 degrees. For example, a third line 893 represents an accuracy shift in accordance with a third sample. The third line 893 has a value of approximately -0.18 at approximately 180 degrees, has a value of approximately -0.15 at approximately 135 degrees, has a value of approximately -0.077 at approximately 90 degrees, has a value of approximately -0.025 at approximately 45 degrees, and has a value of approximately 0 at approximately 0 degrees. Referring to the first line 891, the second line 892, and the third line 893, it may be identified that an incline of each of lines change rapidly at approximately 90 degrees and/or approximately -90 degrees. The certain manner may be used for modeling. For example, in modeling in accordance with the samples of the graph 890, measurement data (e.g., pressure offset data) at approximately 90 degrees, in addition to approximately 0 degrees and approximately 180 degrees, may be meaningfully used for pressure correction to be described later. The electronic device 101 may determine an operation scheme defining a relationship between direction information of the barometric pressure sensor 210 and a correction value based on a statistical result according to the degree of rotation and the accuracy shift. As an example, the operation scheme may be a polynomial function.

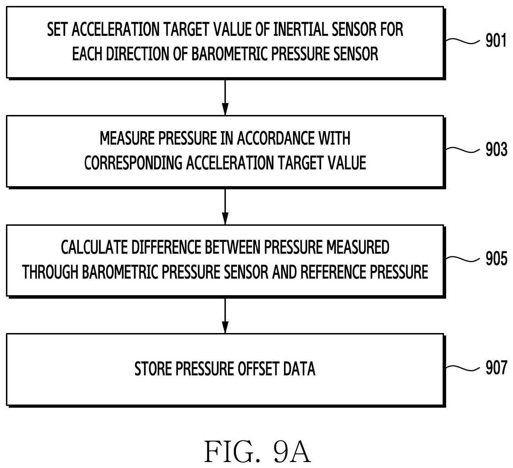

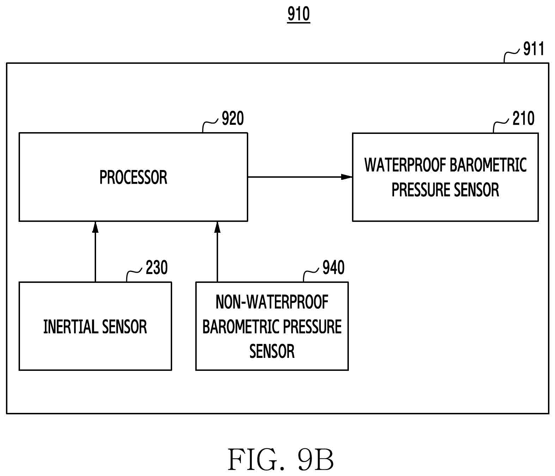

FIG. 9A illustrates an operation flow of a device for measuring pressure offset data of a barometric pressure sensor. FIG. 9B illustrates an example of a test board for pressure offset data. The device may be the electronic device 101, a device including the electronic device 101, or separate test equipment (e.g., a test board 910 of FIG. 9B). The test board 910 illustrated in FIG. 9B may include a board 911, a processor 920, a barometric pressure sensor 210, an inertial sensor 230, and a non-waterproof barometric pressure sensor 940. The barometric pressure sensor 210 and the inertial sensor 230 may be identical to the barometric pressure sensor 210 and the inertial sensor 230 included in the electronic device 101 for testing. The processor 920 may be configured to process data from the barometric pressure sensor 210, the inertial sensor 230, and the non-waterproof barometric pressure sensor 940, and to perform operations using the data. For example, the processor 920 may perform designated operations or store related values in another component (e.g., the barometric pressure sensor 210) by using pressure data measured through the barometric pressure sensor 210, sensing data (e.g., location, posture, or incline) measured through the inertial sensor 230, and/or pressure data measured through the non-waterproof barometric pressure sensor 940. The non-waterproof barometric pressure sensor 940 indicates a barometric pressure sensor without a waterproof member 330, unlike the barometric pressure sensor 210. For example, a sensing element of the non-waterproof barometric pressure sensor 940 may directly contact a medium (e.g., air). Pressure measured through the non-waterproof barometric pressure sensor 940 may be used as reference pressure for the barometric pressure sensor 210. The test board 910 may be used to obtain an accuracy shift of the measured pressure in accordance with a degree of rotation (e.g., a rotation angle) of the barometric pressure sensor 210. In order to more accurately measure atmospheric pressure (or water pressure) through the barometric pressure sensor 210, it may be required to remove an influence caused by the waterproof member 330 inside the barometric pressure sensor 210. Accordingly, the processor 920 of the test board 910 may calculate pressure offset data for each direction of the barometric pressure sensor 210. For example, the processor 920 may calculate pressure offset data in a designated direction in accordance with a difference between the pressure measured through the non-waterproof barometric pressure sensor 940 and pressure measured through the barometric pressure sensor 210. Since the waterproof member 330 is not disposed inside the non-waterproof barometric pressure sensor 940, a pressure difference in accordance with a direction may occur relatively less in the non-waterproof barometric pressure sensor 940 compared to the barometric pressure sensor 210. According to an embodiment, the pressure data measured through the non-waterproof barometric pressure sensor 940 may be used as reference pressure for determining a pressure offset caused by a weight of the waterproof member 330. For example, a difference between a pressure value of the non-waterproof barometric pressure sensor 940 and a pressure value of the waterproof barometric pressure sensor 210 may indicate an error level of the pressure value of the barometric pressure sensor 210 in accordance with an angle.

In the following embodiment, each operation may be performed sequentially, but is not necessarily performed sequentially. For example, an order of each operation may be changed, and at least two operations may be performed in parallel.

Referring to FIG. 9A, according to an embodiment, in operation 901, the device (e.g., the processor 920) may set an acceleration target value of the inertial sensor 230 for each direction of the barometric pressure sensor 210. A direction of the barometric pressure sensor 210 indicates a direction (e.g., a direction in which a pressure sensing surface of the sensing element 310 faces) of a sensing element 310 of the barometric pressure sensor 210. The acceleration target value may indicate an influence of gravity due to the weight of the waterproof member 330. For example, the device may set the acceleration target value of the inertial sensor 230 in each of three states in which an angle formed between the pressure sensing surface and a ground is approximately 0 degrees, approximately 90 degrees, and approximately 180 degrees. In a first state in which the angle formed between the pressure sensing surface and the ground is approximately 0 degrees, magnitude of the gravity due to the weight of the waterproof member 330 may be approximately 1G. In a second state in which the angle formed between the pressure sensing surface and the ground is approximately 90 degrees, magnitude of the gravity due to the weight of the waterproof member 330 may be approximately 0G. In a third state in which the angle formed between the pressure sensing surface and the ground is approximately 180 degrees, magnitude of the gravity due to the weight of the waterproof member 330 may be approximately -1G.

According to an embodiment, in operation 903, the device (e.g., the processor 920) may measure pressure in accordance with the acceleration target value. The device may determine whether acceleration of the sensing data of the inertial sensor 230 reaches the acceleration target value. In a case that the acceleration indicated by the sensing data of the inertial sensor 230 reaches the acceleration target value, the device may measure pressure through each of the barometric pressure sensor 210 and the non-waterproof barometric pressure sensor 940. For example, the device may measure pressure through each of the barometric pressure sensor 210 and the non-waterproof barometric pressure sensor 940 when the sensing data of the inertial sensor 230 indicates approximately 1G in the first state. For example, the device may measure pressure through each of the barometric pressure sensor 210 and the non-waterproof barometric pressure sensor 940 when the sensing data of the inertial sensor 230 indicates approximately 0G in the second state. For example, the device may measure pressure through each of the barometric pressure sensor 210 and the non-waterproof barometric pressure sensor 940 when the sensing data of the inertial sensor 230 indicates approximately -1G in the third state.

According to an embodiment, in operation 905, the device (e.g., the processor 920) may calculate a difference between pressure measured through a barometric pressure sensor (e.g., the barometric pressure sensor 210) and the reference pressure. The reference pressure may be set in various manners. For example, the reference pressure may be set as a preset value (e.g., 1013 hPa). For another example, the reference pressure may be data measured through the non-waterproof barometric pressure sensor 940. Based on a specific state, the device may determine a difference between pressure measured through the barometric pressure sensor 210 and the reference pressure as pressure offset data in the specific state. For example, the device may determine a difference between pressure measured through the barometric pressure sensor 210 and the reference pressure in the first state as pressure offset data for a first direction (e.g., a direction of the pressure sensing surface of the barometric pressure sensor 210, or a direction protruding vertically from the ground) of the barometric pressure sensor 210. For example, the device may determine a difference between pressure measured through the barometric pressure sensor 210 and the reference pressure in the second state as pressure offset data for a second direction (e.g., a direction of the pressure sensing surface of the barometric pressure sensor 210, or a direction parallel to the ground) of the barometric pressure sensor 210. For example, the device may determine a difference between pressure measured through the barometric pressure sensor 210 and the reference pressure in the third state as pressure offset data for a third direction (e.g., a direction of the pressure sensing surface of the barometric pressure sensor 210, or a direction toward the ground) of the barometric pressure sensor 210.

According to an embodiment, in operation 907, the device (e.g., the processor 920) may store pressure offset data. The device may store the pressure offset data in the waterproof barometric pressure sensor 210. For example, pressure offset data for each direction of the barometric pressure sensor 210 may be stored in a memory space in an ASIC of the barometric pressure sensor 210. Thereafter, the waterproof barometric pressure sensor 210 may be used for the pressure correction described in FIG. 4 by being mounted on a board (e.g., an FPCB) of the electronic device 101.

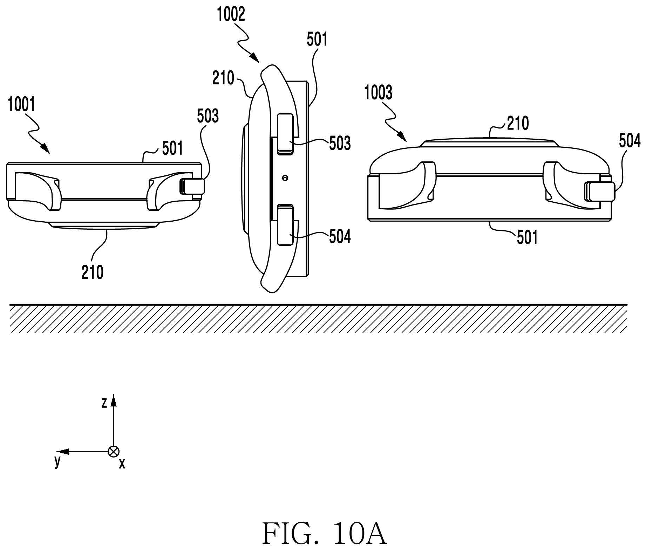

Referring again to FIG. 9B, the test board 910 may be used to measure a change in a pressure value in accordance with rotation of the barometric pressure sensor 210. For example, in an environment in which a pressure change due to external wind or air flow is minimized, when the test board 910 rotates, pressure offset data may be measured through data of the barometric pressure sensor 210 and/or the non-waterproof barometric pressure sensor 940. According to an embodiment, the processor 920 may store a correction value for the barometric pressure sensor 210 in memory (e.g., memory of the barometric pressure sensor 210) in the electronic device 101 at each of designated angles (e.g., approximately 0 degrees (e.g., corresponding to 1G), approximately 90 degrees (e.g., corresponding to 0G), and 180 degrees (e.g., corresponding to -1G)) during rotation. The designated directions may have a relatively higher usage frequency compared to other directions when a user wears the electronic device 101. A description regarding the designated angles will be described in more detail with reference to FIGS. 10A to 10C. Referring to a disposition of FIG. 9B, in the test board 910, the barometric pressure sensor 210 and the inertial sensor 930 may be disposed based on a disposition in the electronic device 101. For example, the barometric pressure sensor 210 and the inertial sensor 930 may be disposed in accordance with a location at which each component is mounted in the electronic device 101, such as in the plan view 701 of FIG. 7. Since the waterproof member 330 in the barometric pressure sensor 210 is not uniformly applied with respect to all directions, it may be required to correct pressure in a direction having high usability for the user. Accordingly, the barometric pressure sensor 210 and the inertial sensor 230 may be disposed in the test board 910 in consideration of the disposition in the electronic device 101.

In FIGS. 9A and 9B, the test board 910 is described as an example, as the device for measuring pressure offset data, but embodiments of the present disclosure are not limited thereto. For example, the electronic device 101 using a preset value (e.g., a value pre-input through measurement using a separate device) instead of the non-waterproof barometric pressure sensor 940 as reference pressure, may be used for measurement of the pressure offset data. For another example, unlike FIGS. 9A and 9B, the electronic device 101 including the non-waterproof barometric pressure sensor 940 may be used for the measurement of the pressure offset data.

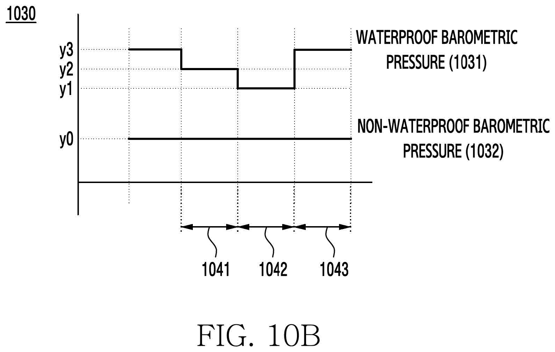

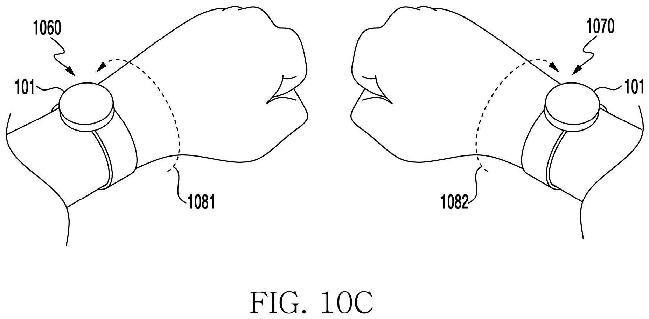

FIGS. 10A, 10B, and 10C illustrate examples of a measurement environment of pressure offset data. When external environmental variables are ideally controlled and are assumed to be all uniform, the same atmospheric pressure may be applied to a barometric pressure sensor 210 regardless of a direction of the barometric pressure sensor 210. In other words, if an external force is excluded and only the atmospheric pressure is measured by the barometric pressure sensor 210, the barometric pressure sensor 210 should output the same pressure data in any directions. However, a waterproof member 330 inside the barometric pressure sensor 210 may cause an unexpected error.

Referring to FIG. 10A, pressure offset data may be measured for three directions. The pressure offset data may include first pressure offset data, second pressure offset data, and third pressure offset data. For example, when a first state 1001 of the electronic device 101 is assumed (e.g., a state in which a display (e.g., the display 520) of the electronic device 101 faces a direction opposite to a ground), the first pressure offset data may be measured. Direction information of the barometric pressure sensor 210 may indicate that a pressure sensing surface of a sensing element 310 faces a +z-axis direction. For example, since a barrel of a housing 360 of the barometric pressure sensor 210 faces the display (e.g., the display 520) of the electronic device 101, the direction information of the barometric pressure sensor 210 may indicate the +z-axis direction. An angle formed between the pressure sensing surface and the ground may be approximately 0 degrees. A direction in which an inlet portion of the housing of the barometric pressure sensor 210 faces may be approximately 90 degrees relative to the ground. Gravity due to the waterproof member 330 may correspond to 1G. For example, when a second state 1002 of the electronic device 101 is assumed (e.g., a state in which the display (e.g., the display 520) of the electronic device 101 faces a direction substantially perpendicular to the ground), the second pressure offset data may be measured. Direction information of the barometric pressure sensor 210 may indicate that the pressure sensing surface of the sensing element 310 faces a -y-axis direction. An angle formed between the pressure sensing surface and the ground may be approximately 90 degrees. A direction in which the inlet portion of the housing of the barometric pressure sensor 210 faces may be substantially parallel to the ground (in other words, approximately 0 degrees). Gravity due to the waterproof member 330 may correspond to 0G. For example, when a third state 1003 of the electronic device 101 is assumed (e.g., a state in which the display (e.g., the display 520) of the electronic device 101 faces the ground), the third pressure offset data may be measured. Direction information of the barometric pressure sensor 210 may indicate that the pressure sensing surface of the sensing element 310 faces a -z-axis direction. An angle formed between the pressure sensing surface and the ground may be approximately 180 degrees. The inlet portion of the housing of the barometric pressure sensor 210 may face the ground. Gravity due to the waterproof member 330 may correspond to -1G.

In accordance with a direction of the barometric pressure sensor 210, a difference in a gravitational effect of the waterproof member 330 within the barometric pressure sensor 210 may cause a height (altitude or water depth) calculation to become inaccurate. Accordingly, in each of the first state 1001, the second state 1002, and the third state 1003, pressure offset data, which is a difference between reference pressure and measured pressure, may be calculated in advance. The calculated pressure offset data may be stored in the electronic device 101. For example, the calculated pressure offset data may be stored inside the barometric pressure sensor 210 (e.g., an ASIC).

Referring to FIG. 10B, a graph 1030 represents pressure data for each state. A horizontal axis of the graph 1030 represents a measurement section, and gravitational acceleration (unit: gravity (G)) applied to the waterproof member 330 may be differently applied in each measurement section. For example, in a first measurement section 1041, gravity due to the waterproof member 330 may correspond to approximately 0G. In a second measurement section 1042, gravity due to the waterproof member 330 may correspond to approximately -1G. In a third measurement section 1043, gravity due to the waterproof member 330 may correspond to approximately 1G. A vertical axis of the graph 1030 represents pressure data. A line 1031 represents pressure data measured through the barometric pressure sensor 210, and a line 1032 represents pressure data measured through a non-waterproof barometric pressure sensor (e.g., the non-waterproof barometric pressure sensor 940). For example, in the first measurement section 1041, pressure data y2 represents pressure data measured when gravity due to the waterproof member 330 is approximately 0G. In the second measurement section 1042, pressure data y1 represents pressure data measured when gravity due to the waterproof member 330 is approximately -1G. In the third measurement section 1043, pressure data y3 represents pressure data measured when gravity due to the waterproof member 330 is approximately 1G. A device (e.g., the electronic device 101 or the test board 910) for measuring pressure offset data may repeatedly obtain pressure data when an acceleration value of an inertial sensor 230 reaches a target value. For example, the device may obtain 100 of pressure data of each of the barometric pressure sensor 210 and the non-waterproof barometric pressure sensor 940 in each state.

The device may obtain 100 of pressure data of each of the barometric pressure sensor 210 and the non-waterproof barometric pressure sensor 940 in the first state 1001. The device may determine first measured pressure data from the 100 of pressure data of the barometric pressure sensor 210. As an example, the first measured pressure data may be an average value, a median value, or a filtered value of the 100 of pressure data. As a non-limiting example, the filtered value may indicate an average of remaining data excluding unnecessary data among the pressure data in the first state 1001. In the same manner, the device may determine first reference pressure data from the 100 of pressure data of the non-waterproof barometric pressure sensor 940. The device may determine first pressure offset data in the first state 1001 based on a difference between the first measured pressure data and the first reference pressure data.

The device may obtain 100 of pressure data of each of the barometric pressure sensor 210 and the non-waterproof barometric pressure sensor 940 in the second state 1002. The device may determine second measured pressure data from the 100 of pressure data of the barometric pressure sensor 210. As an example, the second measured pressure data may be an average value, a median value, or a filtered value of the 100 of pressure data. As a non-limiting example, the filtered value may represent an average of remaining data excluding unnecessary data among the pressure data in the second state 1002. In the same manner, the device may determine second reference pressure data from the 100 of pressure data of the non-waterproof barometric pressure sensor 940. The device may determine second pressure offset data in the second state 1002 based on a difference between the second measured pressure data and the second reference pressure data.

The device may obtain 100 of pressure data of each of the barometric pressure sensor 210 and the non-waterproof barometric pressure sensor 940 in the third state 1003. The device may determine third measured pressure data from the 100 of pressure data of the barometric pressure sensor 210. As an example, the third measured pressure data may be an average value, a median value, or a filtered value of the 100 of pressure data. As a non-limiting example, the filtered value may represent an average of remaining data excluding unnecessary data among the pressure data in the third state 1003. In the same manner, the device may determine third reference pressure data from the 100 of pressure data of the non-waterproof barometric pressure sensor 940. The device may determine third pressure offset data in the third state 1003 based on a difference between the third measured pressure data and the third reference pressure data.

The device may store the first pressure offset data, the second pressure offset data, and/or the third pressure offset data in an inside (e.g., internal memory of the barometric pressure sensor 210) of the electronic device 101. According to an embodiment, each pressure offset data may indicate a difference between measured pressure data and reference pressure data. The device may store pressure offset data for each of three directions. For example, in each of the first state 1001, the second state 1002, and the third state 1003, the electronic device 101 may perform pressure correction by using a value stored in the barometric pressure sensor 210. In another state (e.g., a posture of the electronic device 101 different from the first state 1001, the second state 1002, and the third state 1003), the electronic device 101 may calculate a correction value through an operation scheme determined in accordance with a value stored as the first pressure offset data, the default value, a value stored as the second pressure offset data, and a value stored as the third pressure offset data. For the operation scheme, the description regarding FIG. 4 may be referred to. As an example, each pressure offset data may be determined in accordance with the following equation. [Equation 1] $P _ offset _ 1 = P \left[0\right] - RP \left[0\right] - C$

The Equation 1 is only an example for facilitating understanding, and embodiments of the present disclosure may not be limited thereto. For example, The Equation 1 may be modified, applied, or extended in various ways.

The P_offset_1 indicates first pressure offset data, the P[0] indicates first measured pressure data, and the RP[0] indicates first reference pressure data. The C indicates a constant for securing the number of bits during internal storage, and, as a non-limiting example, the C may be -10. [Equation 2] $P _ offset _ 2 = P \left[1\right] - RP \left[1\right] - C$

The Equation 2 is only an example for facilitating understanding, and the embodiments of the present disclosure may not be limited thereto. For example, the Equation 2 may be modified, applied, or extended in various ways.

The P_offset_2 indicates second pressure offset data, the P[1] indicates second measured pressure data, and the RP[1] indicates second reference pressure data. The C represents a constant for securing the number of bits during internal storage, and, as a non-limiting example, the C may be -10. [Equation 3] $P _ offset _ 3 = P \left[2\right] - RP \left[2\right] - C$

The Equation 3 is only an example for facilitating understanding, and the embodiments of the present disclosure may not be limited thereto. For example, the Equation 3 may be modified, applied, or extended in various ways.

The P_offset_3 indicates third pressure offset data, the P[2] indicates third measured pressure data, and the RP[2] indicates third reference pressure data. The C indicates a constant for securing the number of bits during internal storage, and, as a non-limiting example, the C may be -10.

According to another embodiment, instead of storing pressure offset data for each of three directions, the device may store two pressure offset data. For example, in the first state 1001, direction information of the barometric pressure sensor 210 may be set as a reference direction. The first pressure offset data may be set as a default value (e.g., 0). In other words, in the first state 1001, a pressure correction value due to the waterproof member may be set as the default value (e.g., 0). As an example, since a height change is relative, the device may determine the second pressure offset data as a value obtained by subtracting 'a difference between the second measured pressure data and the second reference pressure data' from 'a difference between the first measured pressure data and the first reference pressure data'. As an example, the device may determine the third pressure offset data as a value obtained by subtracting 'a difference between the third measured pressure data and the third reference pressure data' from 'a difference between the first measured pressure data and the first reference pressure data'. For example, in the first state 1001, the electronic device 101 may perform pressure correction by using the default value, and in each of the second state 1002 and the third state 1003, the electronic device 101 may perform pressure correction by using a value stored in the barometric pressure sensor 210. In another state (e.g., a posture of the electronic device 101 different from the first state 1001, the second state 1002, and the third state 1003), the electronic device 101 may calculate a correction value through an operation scheme determined in accordance with the default value, a value stored as the second pressure offset data, and a value stored as the third pressure offset data. For the operation scheme, the description regarding FIG. 4 may be referred to.

As an example, each pressure offset data may be determined in accordance with the following equation. [Equation 4] $P _ offset _ 1 = 0$

The Equation 4 is only an example for facilitating understanding, and the embodiments of the present disclosure may not be limited thereto. For example, the Equation 4 may be modified, applied, or extended in various ways.

The P_offset_1 indicates first pressure offset data. [Equation 5] $P _ offset _ 2 = \left(P\left[0\right]-RP\left[0\right]-C\right) - \left(P\left[1\right]-RP\left[1\right]-C\right)$

The Equation 5 is only an example for facilitating understanding, and the embodiments of the present disclosure may not be limited thereto. For example, the Equation 5 may be modified, applied, or extended in various ways.

The P_offset_2 indicates second pressure offset data, the P[0] indicates first measured pressure data, and the RP[0] indicates first reference pressure data. The P[1] indicates second measured pressure data, and the RP[1] represents second reference pressure data. The C indicates a constant for securing the number of bits during internal storage, and, as a non-limiting example, the C may be -10. [Equation 6] $P _ offset _ 3 = \left(P\left[0\right]-RP\left[0\right]-C\right) - \left(P\left[2\right]-RP\left[2\right]-C\right)$

The Equation 6 is only an example for facilitating understanding, and the embodiments of the present disclosure may not be limited thereto. For example, the Equation 6 may be modified, applied, or extended in various ways.

The P_offset_3 indicates third pressure offset data, the P[0] indicates first measured pressure data, and the RP[0] indicates first reference pressure data. The P[2] indicates third measured pressure data, and the RP[2] indicates third reference pressure data. The C indicates a constant for securing the number of bits during internal storage, and, as a non-limiting example, the C may be -10.

In FIG. 10B, a direction of the barometric pressure sensor 210 in the first state 1001 is described as the reference direction, but the embodiments of the present disclosure may not be limited thereto. A direction corresponding to -1G may be set as the reference direction. In this case, third pressure offset data may be set as the reference value (e.g., 0), and the electronic device 101 may perform pressure correction by obtaining only first pressure offset data and second pressure offset data from the barometric pressure sensor 210.

Referring to FIG. 10C, a rotation direction of the electronic device 101 may be determined in accordance with a usage frequency of a user. In a process of measuring a pressure offset, an important factor during rotation is a rotation direction. For example, the electronic device 101 may be a watch-type wearable device. A first wearing example 1060 indicates that the electronic device 101 is worn on a left wrist of the user. The user may rotate the electronic device 101 in a direction having a high degree of freedom. In the first wearing example 1060, when a direction from an arm of the user toward a hand is used as a central axis, the electronic device 101 may rotate in a counterclockwise direction 1081. A second wearing example 1070 indicates that the electronic device 101 is worn on a right wrist of the user. The user may rotate the electronic device 101 in a direction having a high degree of freedom. In the second wearing example 1070, when the direction from the arm of the user toward the hand is used as the central axis, the electronic device 101 may rotate in a clockwise direction 1082. From a perspective of the user, there may be a difference between the counterclockwise direction 1081 and the clockwise direction 1082, but from a perspective of the electronic device 101, the rotation may be understood as being performed in substantially the same direction. For example, due to a body structure, since the user generally rotates a watch more frequently in an outward direction from the user, a rotation range may correspond to 0 degrees to 180 degrees in a direction (e.g., the -x-axis direction based on FIG. 7) of the electronic device 101. As an example, the 0 degrees may indicate a direction in which the display of the electronic device 101 is parallel to the ground.

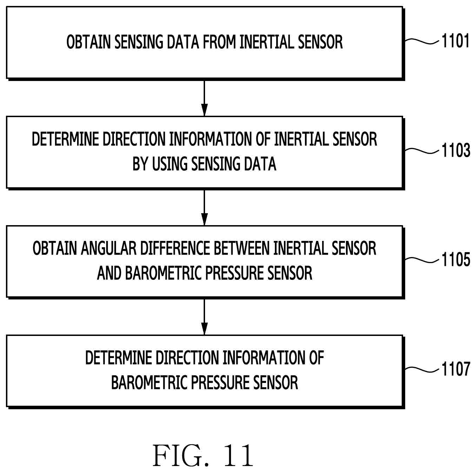

FIG. 11 illustrates an operation flow of an electronic device (e.g., the electronic device 101) for determining direction information of a barometric pressure sensor (e.g., the barometric pressure sensor 210). Operations of FIG. 11 may correspond to an operation of determining direction information of the barometric pressure sensor 210 in the operation 401 of FIG. 4.

In the following embodiment, each operation may be performed sequentially, but is not necessarily performed sequentially. For example, the order of each operation may be changed, and at least two operations may be performed in parallel.

Referring to FIG. 11, according to an embodiment, in operation 1101, the electronic device 101 (e.g., the processor 120) may obtain sensing data from an inertial sensor (e.g., the inertial sensor 230). For example, the sensing data may include acceleration values measured from the inertial sensor 230. As an example, the sensing data may include an acceleration value with respect to an x-axis, an acceleration value with respect to a y-axis, and/or an acceleration value with respect to a z-axis. For example, the sensing data may include rotation angles measured from the inertial sensor 230. As an example, the sensing data may include a roll value, a pitch value, and/or a yaw value. The roll value may indicate a rotation angle with respect to a rotation axis of the electronic device 101. The roll value may indicate a rotation angle of the inertial sensor 230 and/or the barometric pressure sensor 210.

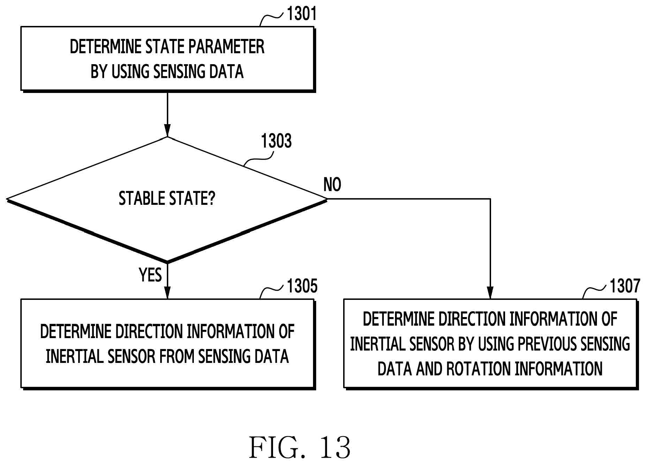

According to an embodiment, in operation 1103, the electronic device 101 (e.g., the processor 120) may determine direction information of the inertial sensor 230 by using the sensing data. For example, the electronic device 101 may determine the direction information of the inertial sensor 230 based on acceleration values for each of axes of the sensing data. For example, the electronic device 101 may determine the direction information of the inertial sensor 230 by using the rotation angles of the sensing data. As a non-limiting example, the electronic device 101 may perform filtering in consideration of an output data rate (ODR) difference between the inertial sensor 230 and the barometric pressure sensor 210. The filtering may be used to prevent a situation in which a degree of error increases due to a sudden change. Operations in which the electronic device 101 determines the direction information of the inertial sensor 230 will be described in detail with reference to FIG. 13.

According to an embodiment, in operation 1105, the electronic device 101 (e.g., the processor 120) may obtain an angular difference between the inertial sensor 230 and the barometric pressure sensor 210. For example, the angular difference between the inertial sensor 230 and the barometric pressure sensor 210 may represent an angular le difference between a surface on which the inertial sensor 230 is mounted and a surface on which the barometric pressure sensor 210 is mounted. For example, the inertial sensor 230 may be disposed on a surface of a substrate (e.g., an FPCB). The barometric pressure sensor 210 may be disposed on a surface of the substrate or on another surface of the substrate opposite to the surface. The angular difference may indicate an angular difference between a direction in which the surface on which the inertial sensor 230 is disposed faces and a direction in which a pressure sensing surface of a sensing element 310 of the barometric pressure sensor 210 faces. For example, if the barometric pressure sensor 210 and the inertial sensor 230 are mounted on the same plane, a total of four examples may be referred to. The four examples are as shown in the table below.

**[Table 1]**

| | #1 | #2 | #3 | #4 |
|---|---|---|---|---|
| Direction information of the barometric | 0° | 0° | 180° | 180° |
| pressure sensor (e.g., a tilted angle) | | | | |
| Direction information of the inertial sensor (e.g., a tilted angle) | 0° | 180° | 0° | 180° |
| An angular difference between the inertial sensor and the barometric pressure sensor | 0° | 180° | 180° | 0° |

According to an embodiment, the electronic device 101 may obtain, from the barometric pressure sensor 210, the angular difference between the inertial sensor 230 and the barometric pressure sensor 210. Before the barometric pressure sensor 210 is mounted on the substrate of the electronic device 101, information on the angular difference due to a difference between a disposition of the barometric pressure sensor 210 and a disposition of the inertial sensor 230, may be pre-stored in the barometric pressure sensor 210. For example, the information on the angular difference may be stored in an ASIC of the barometric pressure sensor 210. The electronic device 101 may obtain the angular difference between the inertial sensor 230 and the barometric pressure sensor 210 from the ASIC. According to another embodiment, the electronic device 101 may obtain information on the angular difference between the inertial sensor 230 and the barometric pressure sensor 210 through an external input. In accordance with a design disposition of the electronic device 101 or a number indicating the design disposition, the angular difference between the inertial sensor 230 and the barometric pressure sensor 210 in the electronic device 101 may be provided to the electronic device 101 through a separate input. As an example, the electronic device 101 may obtain the angular difference between the inertial sensor 230 and the barometric pressure sensor 210 from a separate device (e.g., the electronic device 102, the electronic device 104, and/or the server 108) connected to the electronic device 101 through wireless communication. As another example, the electronic device 101 may obtain the angular difference between the inertial sensor 230 and the barometric pressure sensor 210 through a manual input of a user of the electronic device 101.

According to an embodiment, in operation 1107, the electronic device 101 (e.g., the processor 120) may determine direction information of the barometric pressure sensor 210. The electronic device 101 may determine the direction information of the barometric pressure sensor 210 based on the angular difference between the inertial sensor 230 and the barometric pressure sensor 210 and the direction information of the inertial sensor 230.

The electronic device 101 may determine a correction value in accordance with the operation 403 after determining the direction information of the barometric pressure sensor 210. Before determining the correction value, the electronic device 101 may determine an operation scheme for pressure correction. The operation scheme for pressure correction may be independent of the determination of the direction information of the barometric pressure sensor. For example, the operation scheme for pressure correction may be determined prior to the direction information of the barometric pressure sensor and pre-stored. As another example, the operation scheme for pressure correction may be derived after determining the direction information of the barometric pressure sensor.

The electronic device 101 may determine the correction value in accordance with the direction information of the barometric pressure sensor 210 based on pressure offset data stored in accordance with the method described with reference to FIG. 9A to FIG. 10C. For example, the electronic device 101 may determine the operation scheme for pressure correction by using pressure offset data for each of three directions. As an example, the pressure offset data may be as follows.

**[Table 2]**

| No. | -1G(-180°) | 0G(-90°) | 1G(-0°) | | Equation |
|---|---|---|---|---|---|
| #1 | -0.17 | -0.05 | 0 | -> | y = -(711620000) x²- (3/18000) x |
| #2 | -0.14 | -0.04 | 0 | -> | y = -(6/1620000) x² - (2/18000) x |
| #3 | -0.18 | -0.11 | 0 | -> | y = (4/1620000) x² - (26/18000) x |

In the [Table 2], the 'No' indicates a sample number. The '1G' indicates first pressure offset data in the first state 1001, the '0G' indicates second pressure offset data in the second state 1002, and the '-1G' indicates third pressure offset data in the third state 1003. The electronic device 101 may determine an operation scheme by using pressure offset data of each sample number. For example, the electronic device 101 may model a relationship between direction information (e.g., a tilting angle) of the barometric pressure sensor 210 and a pressure offset value as a quadratic function. In a first sample number, the electronic device 101 may determine 'y = - (7/1620000)x² - (3/18000) x' as an operation scheme for pressure correction. The x indicates direction information of the barometric pressure sensor 210, and the y indicates a pressure offset value to be applied. In a second sample number, the electronic device 101 may determine 'y = - (6/1620000)x² - (2/18000) x' as an operation scheme for pressure correction. The x indicates direction information of the barometric pressure sensor 210, and the y indicates a pressure offset value to be applied. In a third sample number, the electronic device 101 may determine 'y = (4/1620000)x² - (26/18000) x' as an operation scheme for pressure correction. The x indicates direction information of the barometric pressure sensor 210, and the y indicates a pressure offset value to be applied.

The electronic device 101 may determine an operation scheme for pressure correction by using data (e.g., the first pressure offset data, the second pressure offset data, and the third pressure offset data) at three points, as illustrated in the Table 1. The electronic device 101 may store the operation scheme therein. After obtaining direction information of the barometric pressure sensor 210, the electronic device 101 may calculate a correction value corresponding to the direction information by using the operation scheme. For example, the electronic device 101 may determine that the barometric pressure sensor 210 is tilted by approximately 38 degrees from a reference direction (e.g., a gravity direction). The electronic device 101 may determine approximately 38 degrees as the direction information of the barometric pressure sensor 210. The electronic device 101 may determine a correction value corresponding to approximately 38 degrees, which is the direction information of the barometric pressure sensor 210, by using the sample #2. The electronic device 101 may determine a correction value corresponding to approximately -0.00957 hPa. The electronic device 101 may determine final pressure information by adding the correction value to a pressure value measured through the barometric pressure sensor 210. As another example, the electronic device 101 may determine that the barometric pressure sensor 210 is tilted by approximately 152 degrees from the reference direction (e.g., the gravity direction). The electronic device 101 may determine approximately 152 degrees as the direction information of the barometric pressure sensor 210. The electronic device 101 may determine a correction value corresponding to approximately 152 degrees, which is the direction information of the barometric pressure sensor 210, by using the sample #3. The electronic device 101 may determine a correction value corresponding to approximately -0.1625 hPa. The electronic device 101 may determine final pressure information by adding the correction value to a pressure value measured through the barometric pressure sensor 210.

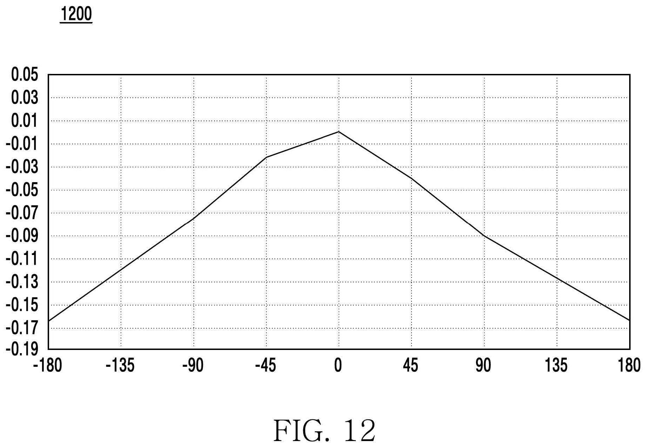

FIG. 12 illustrates an example of a change in accuracy of measured pressure in accordance with a degree of rotation of a barometric pressure sensor (e.g., the barometric pressure sensor 210). The degree of rotation indicates a tilted angle from a rotation axis (e.g., a direction from an arm of a body toward a hand) of the barometric pressure sensor, that is, a roll value. The degree of rotation may be indicated through direction information of the barometric pressure sensor 210.

Referring to FIG. 12, a graph 1200 represents a change in accuracy of measured pressure in accordance with a degree of rotation. A horizontal axis of the graph 1200 represents a degree of rotation (unit: degree), and a vertical axis of the graph 1200 represents a change in accuracy of measured pressure (unit: hPa). Referring to the graph 1200, it may be identified that, at approximately 45 degrees, a value of the change in accuracy is approximately -0.04 hPa. If pressure offset data respectively indicates approximately 0 hPa, approximately -0.09 hPa, and approximately -0.17 hPa when the direction information (e.g., a roll value) of the barometric pressure sensor 210 is approximately 0 degrees, approximately 90 degrees, and approximately 180 degrees, an operation scheme may be modeled by the following equation. [Equation 7] $y = \left(1/1620000\right) {x}^{2} - \left(19/18000\right) x$

The Equation 7 is only an example for facilitating understanding, and embodiments of the present disclosure may not be limited thereto. For example, the Equation 7 may be modified, applied, or extended in various ways.

The x indicates direction information of the barometric pressure sensor 210, and the y indicates a pressure offset value to be applied. As an example, when the x is approximately 45 degrees, a correction value is approximately -0.04625 hPa. When the barometric pressure sensor 210 is tilted by approximately 45 degrees, a measured offset is approximately -0.04 hPa. Accordingly, an error occurs by approximately 0.00625 hPa. However, the error of this level may be understood as being at a negligible level, as it is less than approximately 10 cm.

FIG. 13 illustrates an operation flow of an electronic device (e.g., the electronic device 101) for determining direction information of an inertial sensor (e.g., the inertial sensor 230). Direction information of the inertial sensor 230 may indicate a degree of tilt of the inertial sensor 230. For example, the direction information of the inertial sensor 230 may indicate an angular difference between a surface on which the inertial sensor 230 is disposed and a ground.

In the following embodiment, each operation may be performed sequentially, but is not necessarily performed sequentially. For example, an order of each operation may be changed, and at least two operations may be performed in parallel.

Referring to FIG. 13, according to an embodiment, in operation 1301, the electronic device 101 (e.g., the processor 120) may determine a state parameter by using sensing data. The electronic device 101 may obtain sensing data from the inertial sensor 230. The electronic device 101 may determine a state parameter associated with acceleration by using the sensing data. The state parameter may be used to determine whether the electronic device 101 is in a stable state. For example, the state parameter may indicate an acceleration variance. The electronic device 101 may determine magnitude of acceleration at each time sample in order to determine the acceleration variance. As an example, the magnitude of the acceleration may be determined in accordance with the following equation. [Equation 8] $Magnitude = \sqrt{ac {c}_{x}^{2} + ac {c}_{y}^{2} + ac {c}_{z}^{2}}$

The Equation 8 is only an example for facilitating understanding, and embodiments of the present disclosure may not be limited thereto. For example, Equation 8 may be modified, applied, or extended in various ways.

The 'Magnitude' indicates magnitude of acceleration. The 'accₓ' indicates an acceleration value of an x-axis of the inertial sensor 230. The 'acc_{y}' indicates an acceleration value of a y-axis of the inertial sensor 230. The 'acc_{z}' indicates an acceleration value of a z-axis of the inertial sensor 230.

For example, the state parameter may indicate an amount of change in an angle (e.g., an incline of a tilting angle). The electronic device 101 may determine the tilting angle in order to determine the amount of change in the angle. As an example, the tilting angle may be determined in accordance with the following equation. [Equation 9] $Z axis ang le : {sin}^{- 1} \left(\frac{ac {c}_{z}}{magnitude}\right) ∗ 180 / π$

The Equation 9 is only an example for facilitating understanding, and the embodiments of the present disclosure may not be limited thereto. For example, the Equation 9 may be modified, applied, or extended in various ways.

The 'Z axis angle' indicates an angle tilted with respect to a direction (e.g., a +z-axis) perpendicular to the ground. The 'Magnitude' indicates magnitude of acceleration. The 'acc_{z}' represents an acceleration value of the z-axis of the inertial sensor 230.

According to an embodiment, in operation 1303, the electronic device 101 (e.g., the processor 120) may determine whether the electronic device 101 is in a stable state. The electronic device 101 may determine whether the electronic device 101 is in the stable state by using the state parameter. For example, the electronic device 101 may determine whether an acceleration variance is greater than a threshold value. If the acceleration variance is greater than the threshold value, since acceleration changes rapidly, the electronic device 101 may determine that a state of the electronic device 101 is not stable. If the acceleration variance is less than or equal to the threshold value, the electronic device 101 may determine that the state of the electronic device 101 is stable. For example, the electronic device 101 may determine whether an amount of change in an angle of the inertial sensor 230 is within a threshold range. As an example, the threshold range may indicate a range less than a + error from a reference value and greater than or equal to a - error from the reference value. The amount of change in the angle may indicate an incline of the angle of the inertial sensor 230. If the amount of change in the angle is substantially fixed within an error range from the reference value, a movement of the electronic device 101 may be understood as being linear. If the amount of change in the angle of the inertial sensor 230 is outside the threshold range, the electronic device 101 may determine that the state of the electronic device 101 is not stable. If the amount of change in the angle of the inertial sensor 230 is within the threshold range, the electronic device 101 may determine that the state of the electronic device 101 is stable. In a case that the state of the electronic device 101 is determined to be stable, the electronic device 101 may perform operation 1305. In a case that the state of the electronic device 101 is determined not to be stable, the electronic device 101 may perform operation 1307.

According to an embodiment, in the operation 1305, the electronic device 101 (e.g., the processor 120) may determine direction information of the inertial sensor 210 from the sensing data. Since the electronic device 101 may trust the sensing data of the inertial sensor 210, the electronic device 101 may determine the direction information of the inertial sensor 210 by using the sensing data. The direction information of the inertial sensor 210 may indicate a rotation axis and an incline from the rotation axis. The electronic device 101 may determine, from the sensing data of the inertial sensor 210, information on the rotation axis (hereinafter, rotation axis information) and the incline from the rotation axis (hereinafter, a rotation angle). For example, the direction information may be determined in accordance with roll, pitch, and/or yaw measured through the inertial sensor 210. As an example, the rotation information may be determined in accordance with the following equations. [Equation 10] $Roll = θ . Pitch = Φ . yaw = ψ$

The Equation 10 is only an example for facilitating understanding, and the embodiments of the present disclosure may not be limited thereto. For example, the Equation 10 may be modified, applied, or extended in various ways.

The Roll indicates a roll value measured through the inertial sensor 210, the Pitch indicates a pitch value measured through the inertial sensor 210, and the Yaw indicates a yaw value measured through the inertial sensor 210. [Equation 11] $R = \left[\begin{matrix}cos \left(ψ\right) cos \left(ϕ\right) & cos \left(ψ\right) sin \left(ϕ\right) sin \left(θ\right) - cos \left(θ\right) sin \left(ψ\right) & sin \left(θ\right) sin \left(ψ\right) + cos \left(ψ\right) sin \left(ϕ\right) cos \left(θ\right) \\ cos \left(ϕ\right) sin \left(ψ\right) & cos \left(ψ\right) cos \left(θ\right) + sin \left(ψ\right) sin \left(ϕ\right) sin \left(θ\right) & cos \left(θ\right) sin \left(ψ\right) sin \left(ϕ\right) - cos \left(ψ\right) sin \left(θ\right) \\ - sin \left(ϕ\right) & cos \left(ϕ\right) sin θ & cos \left(ϕ\right) cos \left(θ\right)\end{matrix}\right]$

The Equation 11 is only an example for facilitating understanding, and the embodiments of the present disclosure may not be limited thereto. For example, the Equation 11 may be modified, applied, or extended in various ways.

The R indicates a rotation matrix. [Equation 12] $p = \left[\frac{{R}_{32} - {R}_{23}}{2 sinα}, \frac{{R}_{13} - {R}_{31}}{2 sinα}, \frac{{R}_{21} - {R}_{12}}{2 sinα}\right] , α = acos \left(\frac{1}{2}\left({R}_{11}+{R}_{22}+{R}_{33}\right)-\frac{1}{2}\right)$

The Equation 12 is only an example for facilitating understanding, and the embodiments of the present disclosure may not be limited thereto. For example, the Equation 12 may be modified, applied, or extended in various ways.

The p indicates rotation axis information (e.g., a vector indicating the rotation axis), and the α indicates a rotation angle from the rotation axis.

According to an embodiment, in the operation 1307, the electronic device 101 (e.g., the processor 120) may determine direction information of the inertial sensor 210 by using previous sensing data and rotation information. Since the electronic device 101 may not trust sensing data of the inertial sensor 210, the electronic device 101 may use the previous sensing data. The previous sensing data indicates most recent sensing data when the electronic device 101 is in a stable state. In other words, a state parameter in accordance with the previous sensing data may indicate that the electronic device 101 is in the stable state. The electronic device 101 may obtain rotation information. The rotation information indicates a rotation angle difference of the electronic device 101 between the previous sensing data and the sensing data of the operation 1301. The electronic device 101 may directly calculate a direction toward which the inertial sensor 230 currently faces by using the rotated angle difference.

The direction information of the inertial sensor 230 obtained through FIG. 13 may be used to determine direction information of the barometric pressure sensor 210. Before determining the direction information of the barometric pressure sensor 210, as a non-limiting example, the direction information of the inertial sensor 230 may be filtered. The electronic device 101 may pass the direction information of the inertial sensor 230 through at least one filter. The at least one filter may be used to reduce a problem in which an error increases due to a sudden change in angle. For example, the at least one filter may include an average filter. The at least one filter may include a Hampel filter. As an example, during a unit time, the inertial sensor 230 may output sensing data ten times, while the barometric pressure sensor 210 may measure pressure data three times. Due to an output data rate (ODR) difference between the inertial sensor 230 and the barometric pressure sensor 210, the barometric pressure sensor 210 may have difficulty sufficiently reflecting a change amount of the inertial sensor 230. The at least one filter may be used to prevent an error caused by the ODR difference and to prevent an inaccurate offset correction value from being applied to the barometric pressure sensor 210 in a situation accompanied by an impact other than a simple fall (e.g., a fall accident). The electronic device 101 may determine the direction information of the barometric pressure sensor 210 by using the direction information of the inertial sensor 230 that has passed through the at least one filter (hereinafter, filtered direction information). The electronic device 101 may determine a correction value of pressure by using the direction information of the barometric pressure sensor 210 in an operation scheme derived by using the pressure offset data. The electronic device 101 may determine a correction value corresponding to the direction information of the barometric pressure sensor 210.

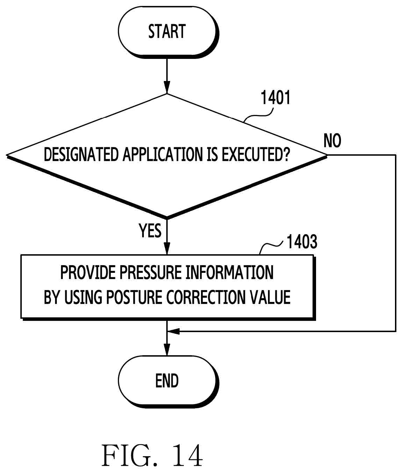

FIG. 14 illustrates an operation flow of an electronic device (e.g., the electronic device 101) for providing pressure information by using pressure offset data. The pressure offset data, which is a posture correction value of the electronic device 101, may be used to correct pressure information. Since the pressure correction procedure described with reference to FIG. 2 to FIG. 13 requires continuously obtaining and correcting sensing data through an inertial sensor 230, power consumption of the electronic device 101 may increase. In order to reduce the power consumption, the electronic device 101 may perform a pressure correction procedure using the posture correction value only in a specific situation.

In the following embodiment, each operation may be performed sequentially, but is not necessarily performed sequentially. For example, an order of each operation may be changed, and at least two operations may be performed in parallel.

Referring to FIG. 14, according to an embodiment, in operation 1401, the electronic device 101 (e.g., the processor 120) may determine whether a designated application is executed. The designated application may be an application requiring more precise altitude measurement (or water depth measurement). For example, the application may be a health application. For example, the application may be a sleep application. For example, the application may be a swimming application. For example, the application may be a fishing application. For example, the application may be an application for triggering an emergency call. In a case that the designated application is executed, the electronic device 101 may perform operation 1403. In a case that the designated application is not executed, the electronic device 101 may terminate a procedure of FIG. 14. Although not illustrated in FIG. 14, the electronic device 101 may provide pressure information (e.g., altitude or water depth) by using pressure values measured through a barometric pressure sensor 210 without using a correction value for each direction.

According to an embodiment, in the operation 1403, the electronic device 101 may provide pressure information by using a posture correction value. Using the posture correction value may include reflecting, in measured pressure, a correction value determined in accordance with a direction of the barometric pressure sensor 210 by using the pressure offset data described with reference to FIG. 2 to FIG. 13.

In FIG. 14, an example in which the pressure correction procedure using the posture correction value is initiated in response to execution of the designated application has been described, but embodiments of the present disclosure may not be limited thereto. The electronic device 101 may be configured to always perform the correction procedure using the pressure offset data described with reference to FIG. 2 to FIG. 13. The electronic device 101 may provide the pressure information regardless of execution of a separate application. For example, the electronic device 101 may continuously monitor a movement of the electronic device 101 and perform the pressure correction procedure using the posture correction value in response to a result of the movement of the electronic device 101. Meanwhile, as a non-limiting example, in a case that a remaining battery level of the electronic device 101 is not sufficient (e.g., a battery state below a designated threshold value) or in a case that the electronic device 101 operates in a specific mode (e.g., a low power mode), the electronic device 101 may perform the pressure correction procedure using the posture correction value passively (manually), instead of performing the pressure correction procedure using the posture correction value in real time. In addition, as another example, instead of execution of the designated application, the electronic device 101 may perform the pressure correction procedure using the posture correction value in a specific mode (e.g., a high performance mode or a battery optimization exclusion mode) of the electronic device 101.

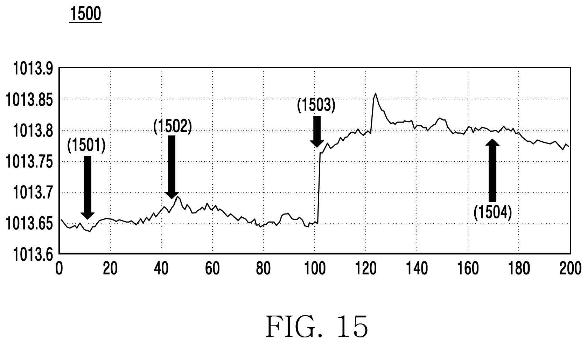

FIG. 15 illustrates examples of barometric pressure measurement results. In FIG. 15, examples of pressure information to which pressure correction is applied by using a correction value in accordance with a posture (or state) of an electronic device 101 described with reference to FIG. 2 to FIG. 14 are described.

Referring to FIG. 15, a graph 1500 represents a change in a pressure value measured by the electronic device 101 when the electronic device 101 falls from a predetermined height from a ground. A horizontal axis of the graph 1500 represents time (unit: sample index), and a vertical axis of the graph 1500 represents pressure (unit: hectopascal (hPa)). Due to the fall of the electronic device 101, as the electronic device 101 becomes closer to the ground, atmospheric pressure applied to the electronic device 101 increases.

At a first point 1501, the electronic device 101 may initiate to fall. At a second point 1502, the electronic device 101 may rotate. Due to the rotation, direction information of the barometric pressure sensor 210 of the electronic device 101 may change. A direction in which a pressure sensing surface of a sensing element 310 in the barometric pressure sensor 210 faces may change. At a third point 1503, the electronic device 101 may perform pressure correction. Since gravity applied by a waterproof member 330 in the barometric pressure sensor 210 to the pressure sensing surface changes in accordance with a direction in which the pressure sensing surface faces, the electronic device 101 may determine a correction value in accordance with the direction. The electronic device 101 may determine a final pressure value by reflecting the correction value in pressure data measured through the barometric pressure sensor 210. The electronic device 101 may output the final pressure value to a user. The final pressure value corresponds to the vertical axis of FIG. 15. At a fourth point 1504, the electronic device 101 may reach the ground. Referring to the first point 1501, the second point 1502, the third point 1503, and the fourth point 1504, it may be identified that the pressure measured by the electronic device 101 gradually increases while the electronic device 101 falls through pressure correction in accordance with a direction of the barometric pressure sensor 210. Since atmospheric pressure actually increases due to the fall of the electronic device 101, the electronic device 101 may provide pressure information suitable for an intention of the user.

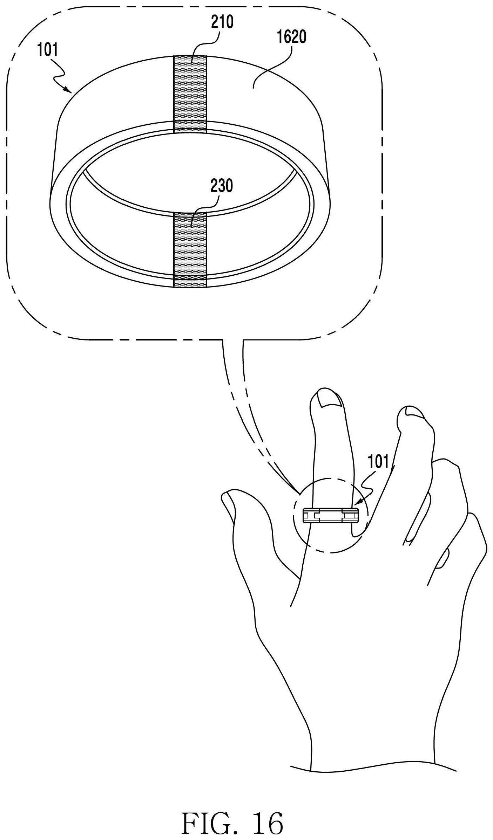

FIG. 16 illustrates an example of a wearable device. The pressure correction procedure for each posture described with reference to FIG. 2 to FIG. 15 may be applied not only to an electronic device such as a smartphone or a wearable device such as a wristwatch, but also to various types of wearable devices.

Referring to FIG. 16, an exemplary wearable device (e.g., the electronic device 101 of FIG. 1) may be used while being worn on a body of a user. For example, the exemplary wearable device 101 may include a ring-shaped housing 1620 configured to be worn on a finger of the user. For example, the housing 1620 may form an exterior of the wearable device 101. For example, a size of the housing 1620 may be determined based on a part of a body on which the wearable device 101 is worn. Since the wearable device 101 is used while being worn on the body of the user, the size of the housing 1620 may be limited. For example, in a case that the wearable device 101 is a ring-type device, the housing 1620 may be limited to a size that allows the wearable device 101 to be worn on the finger. The wearable device 101 including the ring-shaped housing 1620 may be implemented as a ring-type device that may be worn on the finger of the user. In the present disclosure, for convenience of description, the wearable device 101 is described as the ring-type device, but embodiments of the present disclosure may not be limited thereto. For example, the wearable device 101 may include a device in an earring shape that may be worn on an ear of the user, a device in a bracelet shape that may be worn on an arm of the user, and/or a device in a headband shape that may be worn on a head of the user. The wearable device 101 may be used in a state of being worn on the body of the user. For example, the wearable device 101 may be configured to communicate with an external electronic device 102 (e.g., a smartphone) in a state of being worn on the body of the user.

The wearable device 101 may include a barometric pressure sensor 210 and an inertial sensor 230. As a non-limiting example, within the wearable device 101, due to spatial limitations, the barometric pressure sensor 210 and the inertial sensor 230 may be disposed on different planes. As an example, a pressure sensing surface of a sensing element 310 of the barometric pressure sensor 210 may be disposed to face gravity, and the inertial sensor 230 may be disposed to face a direction opposite to the gravity. The wearable device 101 may determine direction information of the barometric pressure sensor 210 by using direction information of the inertial sensor 230 and an angular difference (e.g., approximately 180 degrees). The direction information of the barometric pressure sensor 210 may indicate an angle at which the barometric pressure sensor 210 rotates with the finger as a rotation axis. The wearable device 101 may determine a correction value according to the direction information of the barometric pressure sensor 210 based on an operation scheme for pressure correction. In FIG. 9A to FIG. 12, an example in which pressure offset data for each of three directions is used to determine the operation scheme has been described, but the embodiments of the present disclosure may not be limited thereto. In a case that the wearable device 101 is a ring-type device, a rotation radius of the user may be greater than 180 degrees. Accordingly, the wearable device 101 may determine the operation scheme by using four or more pressure offset data.

The wearable device 101 may perform pressure correction by using an angular difference between the barometric pressure sensor 210 and the inertial sensor 230. As a non-limiting example, in a case of a ring-type device, the angular difference between the barometric pressure sensor 210 and the inertial sensor 230 may vary in accordance with the size of the housing 1620. Accordingly, according to an embodiment, the angular difference value between the barometric pressure sensor 210 and the inertial sensor 230 for each size of the housing 1620 may be stored in the barometric pressure sensor 210. The wearable device 101 may obtain the angular difference in accordance with the size (e.g., a ring size) of the housing 1620 from the barometric pressure sensor 210. According to another embodiment, the wearable device 101 may obtain information on the angular difference between the barometric pressure sensor 210 and the inertial sensor 230 from an external device. As an example, the wearable device 101 may provide the external device with identification information of the wearable device 101 and obtain information on the angular difference corresponding to the identification information from the external device.

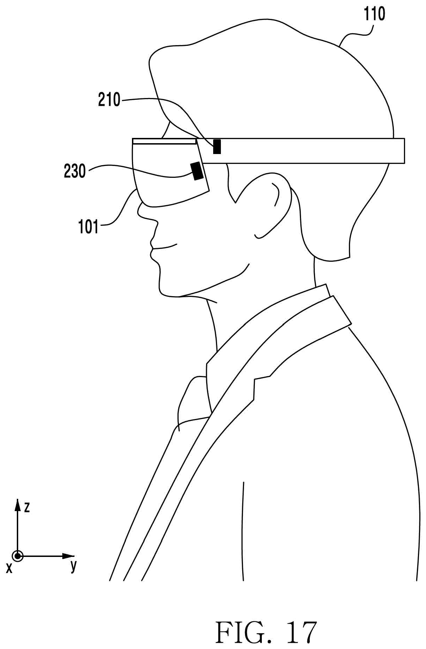

FIG. 17 illustrates an example of a wearable device. The pressure correction procedure for each posture described with reference to FIG. 2 to FIG. 15 may be applied not only to an electronic device such as a smartphone or a wearable device such as a wristwatch, but also to various types of wearable devices.

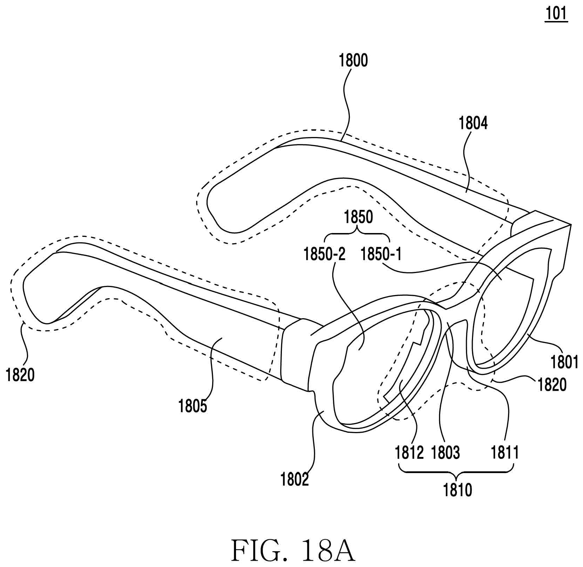

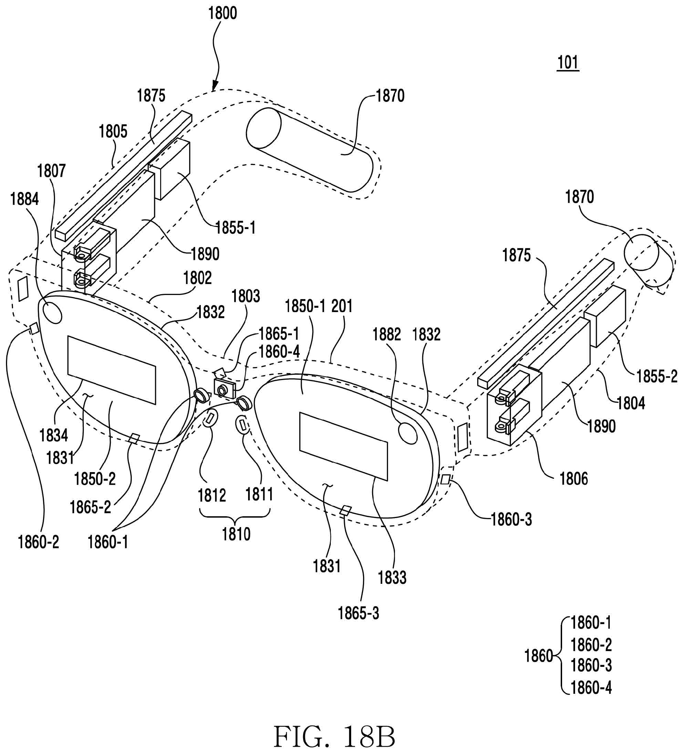

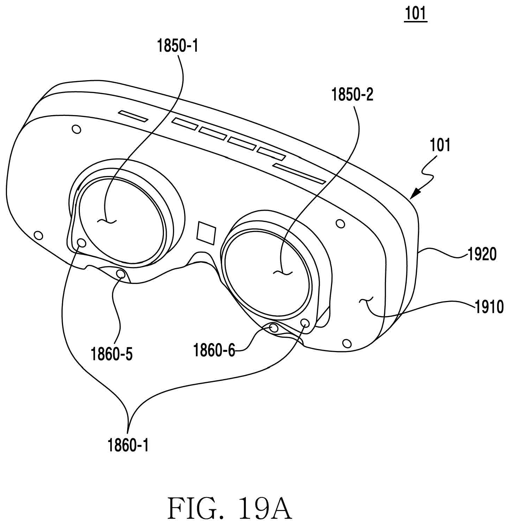

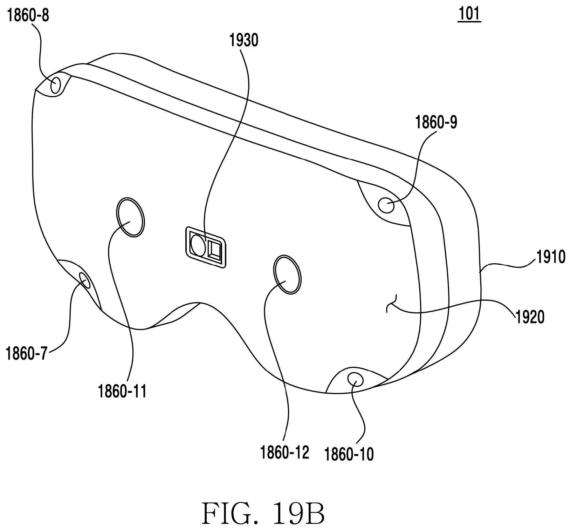

Referring to FIG. 17, an exemplary wearable device (e.g., the electronic device 101 of FIG. 1) may be used while being worn on a body of a user. For example, the exemplary wearable device 101 may include a head-mounted display (HMD) that is wearable on a head of a user 110. The wearable device 101 may be referred to as a head-mounted device (HMD), a headgear electronic device, a glasses-type electronic device, a video see-through or visible see-through (VST) device, an extended reality (XR) device, a virtual reality (VR) device, and/or an augmented reality (AR) device. Although an exterior of the wearable device 101 having a shape of glasses is illustrated, embodiments of the present disclosure may not be limited thereto. An example of a structure of the wearable device 101 that is wearable on the head of the user 110 is described with reference to FIG. 18A, FIG. 18B, FIG. 19A, and/or FIG. 19B. The wearable device 101 may be referred to as an electronic device. For example, the electronic device may form an HMD by being coupled with an accessory (e.g., a strap) for being attached on the head of the user.

According to an embodiment, the wearable device 101 may execute a function associated with augmented reality (AR) and/or mixed reality (MR). For example, in a state in which the user 110 is wearing the wearable device 101, the wearable device 101 may include at least one lens disposed adjacent to eyes of the user 110. The wearable device 101 may combine light emitted from a display of the wearable device 101 with ambient light passing through a lens. A display region of the display may be formed within the lens through which the ambient light passes. Since the wearable device 101 combines the ambient light and the light emitted from the display, the user 110 may view an image in which a real object recognized by the ambient light and a virtual object formed by the light emitted from the display are mixed. The above-described augmented reality, mixed reality, and/or virtual reality may be referred to as extended reality (XR).

According to an embodiment, the wearable device 101 may execute a function associated with the video see-through or visible see-through (VST) and/or the virtual reality (VR). For example, in a state in which the user 110 is wearing the wearable device 101, the wearable device 101 may include a housing covering the eyes of the user 110. The wearable device 101 may include, in the state, a display disposed on a first surface of the housing facing the eyes. The wearable device 101 may include a camera disposed on a second surface opposite to the first surface. By using the camera, the wearable device 101 may obtain an image and/or a video representing ambient light. The wearable device 101 may output the image and/or the video in the display disposed on the first surface, so that the user 110 may recognize the ambient light through the display. A display region (or a displaying area or a displaying region) (or an active area or an active region) of the display disposed on the first surface may be formed by one or more pixels included in the display. The wearable device 101 may synthesize a virtual object into the image and/or the video output through the display, so that the user 110 may recognize the virtual object together with a real object recognized by the ambient light.

The wearable device 101 may include a barometric pressure sensor 210 and an inertial sensor 230. As a non-limiting example, within the wearable device 101, due to spatial limitations, the barometric pressure sensor 210 and the inertial sensor 230 may be disposed on different planes. As an example, a pressure sensing surface of a sensing element 310 of the barometric pressure sensor 210 may be disposed to face a direction perpendicular to gravity, and the inertial sensor 230 may be disposed to face a direction opposite to the gravity. The wearable device 101 may determine direction information of the barometric pressure sensor 210 by using direction information of the inertial sensor 230 and an angular difference (e.g., approximately 90 degrees). The direction information of the barometric pressure sensor 210 may indicate an angle at which the barometric pressure sensor 210 rotates with a direction (e.g., a +z-axis direction) from a torso of the user to the head of the user as a rotation axis, or may indicate an angle of rotation with a direction (e.g., a -x-axis direction or a +y-axis direction) parallel to the ground and passing through a neck of the user as a rotation axis. In a case of an HMD-type wearable device, since a degree of rotational freedom of the user is high, the direction information of the barometric pressure sensor 210 may indicate both a roll value and a pitch value (or, as another example, the direction information may indicate all of a roll value, a pitch value, and a yaw value). When determining an operation scheme, the wearable device 101 may determine a correction value corresponding to the direction information of the barometric pressure sensor 210 through an operation scheme using two or more variables (e.g., a roll angle, a pitch angle, and a yaw angle). [Equation 13] $y = f \left(x, z\right)$

The Equation 13 is only an example for facilitating understanding, and the embodiments of the present disclosure may not be limited thereto. For example, the Equation 13 may be modified, applied, or extended in various ways.

The x indicates a first value (e.g., a roll value) among the direction information of the barometric pressure sensor 210, and the z indicates a second value (e.g., a pitch value) among the direction information of the barometric pressure sensor 210. The f(a, b) indicates an operation function for pressure correction, with a and b as variables. The y indicates a pressure offset value to be applied.

The wearable device 101 may determine a correction value in accordance with the direction information of the barometric pressure sensor 210 based on an operation scheme for the pressure correction. In FIG. 9A to FIG. 12, an example in which pressure offset data for each of three directions is used to determine the operation scheme has been described, but the embodiments of the present disclosure may not be limited thereto. In a case that the wearable device 101 is an HMD-type wearable device, rotation axes of the user may be various. In order for the operation scheme to be derived more accurately, the wearable device 101 may determine the operation scheme by using four or more pressure offset data.

FIG. 18A represents an example of a perspective view of a wearable device. FIG. 18B represents an example of one or more hardware disposed in the wearable device. According to an embodiment, a wearable device 101 may have a form of glasses that is wearable on a body part (e.g., head) of a user. The wearable device 101 of FIGS. 18A to 18B may be an example of the wearable device 101 of FIG. 17. The wearable device 101 may include a head-mounted display (HMD). For example, a housing of the wearable device 101 may include a flexible material such as rubber and/or silicone having a form closely attached to a portion of the user's head (for example, a portion of a face surrounding two eyes). For example, the housing of the wearable device 101 may include one or more straps able to be twined around the user's head, and/or one or more temples attachable to ears of the head.

Referring to FIG. 18A, according to an embodiment, the wearable device 101 may include at least one display 1850 and a frame 1800 supporting the at least one display 1850.

According to an embodiment, the wearable device 101 may be wearable on a portion of the user's body. The wearable device 101 may provide augmented reality (AR), virtual reality (VR), or mixed reality (MR) combining the augmented reality and the virtual reality to a user wearing the wearable device 101. For example, the wearable device 101 may display a virtual reality image provided from at least one optical device 1882 and 1884 of FIG. 18B on at least one display 1850, in response to a user's preset gesture obtained through a motion recognition camera 1860-2 and 1860-3 of FIG. 18B.

According to an embodiment, the at least one display 1850 may provide visual information to a user. For example, the at least one display 1850 may include a transparent or translucent lens. The at least one display 1850 may include a first display 1850-1 and/or a second display 1850-2 spaced apart from the first display 1850-1. For example, the first display 1850-1 and the second display 1850-2 may be disposed at positions corresponding to the user's left and right eyes, respectively.

Referring to FIG. 18B, the at least one display 1850 may provide visual information transmitted through a lens included in the at least one display 1850 from ambient light to a user and other visual information distinguished from the visual information18. The lens may be formed based on at least one of a fresnel lens, a pancake lens, or a multi-channel lens. For example, the at least one display 1850 may include a first surface 1831 and a second surface 1832 opposite to the first surface 1831. A display area may be formed on the second surface 1832 of at least one display 1850. When the user wears the wearable device 101, ambient light may be transmitted to the user by being incident on the first surface 1831 and being penetrated through the second surface 1832. For another example, the at least one display 1850 may display an augmented reality image in which a virtual reality image provided by the at least one optical device 1882 and 1884 is combined with a reality screen transmitted through ambient light, on a display area formed on the second surface 1832.

According to an embodiment, the at least one display 1850 may include at least one waveguide 1833 and 1834 that transmits light transmitted from the at least one optical device 1882 and 1884 by diffracting to the user. The at least one waveguide 1833 and 1834 may be formed based on at least one of glass, plastic, or polymer. A nano pattern may be formed on at least a portion of the outside or inside of the at least one waveguide 1833 and 1834. The nano pattern may be formed based on a grating structure having a polygonal or curved shape. Light incident to an end of the at least one waveguide 1833 and 1834 may be propagated to another end of the at least one waveguide 1833 and 1834 by the nano pattern. The at least one waveguide 1833 and 1834 may include at least one of at least one diffraction element (e.g., a diffractive optical element (DOE), a holographic optical element (HOE)), and a reflection element (e.g., a reflection mirror). For example, the at least one waveguide 1833 and 1834 may be disposed in the wearable device 101 to guide a screen displayed by the at least one display 1850 to the user's eyes. For example, the screen may be transmitted to the user's eyes based on total internal reflection (TIR) generated in the at least one waveguide 1833 and 1834.

The wearable device 101 may analyze an object included in a real image collected through a photographing camera 1860-4, combine with a virtual object corresponding to an object that becomes a subject of augmented reality provision among the analyzed object, and display on the at least one display 1850. The virtual object may include at least one of text and images for various information associated with the object included in the real image. The wearable device 101 may analyze the object based on a multi-camera such as a stereo camera. For the object analysis, the wearable device 101 may execute space recognition (e.g., simultaneous localization and mapping (SLAM)) using the multi-camera and/or time-of-flight (ToF)[ 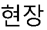 1.1]. The user wearing the wearable device 101 may watch an image displayed on the at least one display 1850.

According to an embodiment, a frame 1800 may be configured with a physical structure in which the wearable device 101 may be worn on the user's body. According to an embodiment, the frame 1800 may be configured so that when the user wears the wearable device 101, the first display 1850-1 and the second display 1850-2 may be positioned corresponding to the user's left and right eyes. The frame 1800 may support the at least one display 1850. For example, the frame 1800 may support the first display 1850-1 and the second display 1850-2 to be positioned at positions corresponding to the user's left and right eyes.

Referring to FIG. 18A, according to an embodiment, the frame 1800 may include an area 1820 at least partially in contact with the portion of the user's body in case that the user wears the wearable device 101. For example, the area 1820 of the frame 1800 in contact with the portion of the user's body may include an area in contact with a portion of the user's nose, a portion of the user's ear, and a portion of the side of the user's face that the wearable device 101 contacts. According to an embodiment, the frame 1800 may include a nose pad 1810 that is contacted on the portion of the user's body. When the wearable device 101 is worn by the user, the nose pad 1810 may be contacted on the portion of the user's nose. The frame 1800 may include a first temple 1804 and a second temple 1805, which are contacted on another portion of the user's body that is distinct from the portion of the user's body.

For example, the frame 1800 may include a first rim 1801 surrounding at least a portion of the first display 1850-1, a second rim 1802 surrounding at least a portion of the second display 1850-2, a bridge 1803 disposed between the first rim 1801 and the second rim 1802, a first pad 1811 disposed along a portion of the edge of the first rim 1801 from one end of the bridge 1803, a second pad 1812 disposed along a portion of the edge of the second rim 1802 from the other end of the bridge 1803, the first temple 1804 extending from the first rim 1801 and fixed to a portion of the wearer's ear, and the second temple 1805 extending from the second rim 1802 and fixed to a portion of the ear opposite to the ear. The first pad 1811 and the second pad 1812 may be in contact with the portion of the user's nose, and the first temple 1804 and the second temple 1805 may be in contact with a portion of the user's face and the portion of the user's ear. The temples 1804 and 1805 may be rotatably connected to the rim through hinge units 1806 and 1807 of FIG. 18B. The first temple 1804 may be rotatably connected with respect to the first rim 1801 through the first hinge unit 1806 disposed between the first rim 1801 and the first temple 1804. The second temple 1805 may be rotatably connected with respect to the second rim 1802 through the second hinge unit 1807 disposed between the second rim 1802 and the second temple 1805. According to an embodiment, the wearable device 101 may identify an external object (e.g., a user's fingertip) touching the frame 1800 and/or a gesture performed by the external object by using a touch sensor, a grip sensor, and/or a proximity sensor formed on at least a portion of the surface of the frame 1800.

According to an embodiment, the wearable device 101 may include hardware (e.g., hardware of the block diagram of FIG. 2) that performs various functions. For example, the hardware may include a battery module 1870, an antenna module 1875, the at least one optical device 1882 and 1884, speakers (e.g., speakers 1855-1 and 1855-2), a microphone (e.g., microphones 1865-1, 1865-2, and 1865-3), a light emitting module (not illustrated), and/or a printed circuit board (PCB) 1890[ 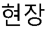 2.1][ 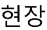 2.2] (e.g., printed circuit board). Various hardware may be disposed in the frame 1800.

According to an embodiment, the microphone (e.g., the microphones 1865-1, 1865-2, and 1865-3) of the wearable device 101 may obtain a sound signal, by being disposed on at least a portion of the frame 1800. The first microphone 1865-1 disposed on the bridge 1803, the second microphone 1865-2 disposed on the second rim 1802, and the third microphone 1865-3 disposed on the first rim 1801 are illustrated in FIG. 18B, but the number and disposition of the microphone 1865 are not limited to an embodiment of FIG. 18B. In case that the number of the microphone 1865 included in the wearable device 101 is two or more, the wearable device 101 may identify a direction of the sound signal by using a plurality of microphones disposed on different portions of the frame 1800.

According to an embodiment, the at least one optical device 1882 and 1884 may project a virtual object on the at least one display 1850 in order to provide various image information to the user. For example, the at least one optical device 1882 and 1884 may be a projector. The at least one optical device 1882 and 1884 may be disposed adjacent to the at least one display 1850 or may be included in the at least one display 1850 as a portion of the at least one display 1850. According to an embodiment, the wearable device 101 may include a first optical device 1882 corresponding to the first display 1850-1, and a second optical device 1884 corresponding to the second display 1850-2. For example, the at least one optical device 1882 and 1884 may include the first optical device 1882 disposed at a periphery of the first display 1850-1 and the second optical device 1884 disposed at a periphery of the second display 1850-2. The first optical device 1882 may transmit light to the first waveguide 1833 disposed on the first display 1850-1, and the second optical device 1884 may transmit light to the second waveguide 1834 disposed on the second display 1850-2.

In an embodiment, a camera 1860 may include the photographing camera 1860-4, an eye tracking camera (ET CAM) 1860-1, and/or the motion recognition camera 1860-2 and 1860-3. The photographing camera 1860-4, the eye tracking camera 1860-1, and the motion recognition camera 1860-2 and 1860-3 may be disposed at different positions on the frame 1800 and may perform different functions. The eye tracking camera 1860-1 may output data indicating a position of eye or a gaze of the user wearing the wearable device 101. For example, the wearable device 101 may detect the gaze from an image including the user's pupil obtained through the eye tracking camera 1860-1. The wearable device 101 may identify an object (e.g., a real object, and/or a virtual object) focused by the user, by using the user's gaze obtained through the eye tracking camera 1860-1. The wearable device 101 identifying the focused object may execute a function (e.g., gaze interaction) for interaction between the user and the focused object. The wearable device 101 may represent a portion corresponding to eye of an avatar indicating the user in the virtual space, by using the user's gaze obtained through the eye tracking camera 1860-1. The wearable device 101 may render an image (or a screen) displayed on the at least one display 1850, based on the position of the user's eye. For example, visual quality (e.g., resolution, brightness, saturation, grayscale, and PPI) of a first area related to the gaze within the image and visual quality of a second area distinguished from the first area may be different. The wearable device 101 may obtain an image having the visual quality of the first area matching the user's gaze and the visual quality of the second area by using foveated rendering. For example, when the wearable device 101 supports an iris recognition function, user authentication may be performed based on iris information obtained using the eye tracking camera 1860-1. An example in which the eye tracking camera 1860-1 is disposed toward the user's right eye is illustrated in FIG. 18B, but the embodiment is not limited thereto, and the eye tracking camera 1860-1 may be disposed alone toward the user's left eye or may be disposed toward two eyes.

In an embodiment, the photographing camera 1860-4 may photograph a real image or background to be matched with a virtual image in order to implement the augmented reality or mixed reality content. The photographing camera 1860-4 may be used to obtain an image having a high resolution based on a high resolution (HR) or a photo video (PV). The photographing camera 1860-4 may photograph an image of a specific object existing at a position viewed by the user and may provide the image to the at least one display 1850. The at least one display 1850 may display one image in which a virtual image provided through the at least one optical device 1882 and 1884 is overlapped with information on the real image or background including an image of the specific object obtained by using the photographing camera 1860-4. The wearable device 101 may compensate for depth information (e.g., a distance between the wearable device 101 and an external object obtained through a depth sensor), by using an image obtained through the photographing camera 1860-4. The wearable device 101 may perform object recognition through an image obtained using the photographing camera 1860-4. The wearable device 101 may perform a function (e.g., auto focus) of focusing an object (or subject) within an image and/or an optical image stabilization (OIS) function (e.g., an anti-shaking function) by using the photographing camera 1860-4. While displaying a screen representing a virtual space on the at least one display 1850, the wearable device 101 may perform a pass through function for displaying an image obtained through the photographing camera 1860-4 overlapping at least a portion of the screen. In an embodiment, the photographing camera 1860-4 may be disposed on the bridge 1803 disposed between the first rim 1801 and the second rim 1802.

The eye tracking camera 1860-1 may implement a more realistic augmented reality by matching the user's gaze with the visual information provided on the at least one display 1850, by tracking the gaze of the user wearing the wearable device 101. For example, when the user looks at the front, the wearable device 101 may naturally display environment information associated with the user's front on the at least one display 1850 at a position where the user is positioned. The eye tracking camera 1860-1 may be configured to capture an image of the user's pupil in order to determine the user's gaze. For example, the eye tracking camera 1860-1 may receive gaze detection light reflected from the user's pupil and may track the user's gaze based on the position and movement of the received gaze detection light. In an embodiment, the eye tracking camera 1860-1 may be disposed at a position corresponding to the user's left and right eyes. For example, the eye tracking camera 1860-1 may be disposed in the first rim 1801 and/or the second rim 1802 to face the direction in which the user wearing the wearable device 101 is positioned.

The motion recognition camera 1860-2 and 1860-3 may provide a specific event to the screen provided on the at least one display 1850 by recognizing the movement of the whole or portion of the user's body, such as the user's torso, hand, or face. The motion recognition camera 1860-2 and 1860-3 may obtain a signal corresponding to motion by recognizing the user's motion (e.g., gesture recognition), and may provide a display corresponding to the signal to the at least one display 1850. The processor may identify a signal corresponding to the operation and may perform a preset function based on the identification. The motion recognition camera 1860-2 and 1860-3 may be used to perform simultaneous localization and mapping (SLAM) for 6 degrees of freedom pose (6 dof pose) and/or a space recognition function using a depth map. The processor may perform a gesture recognition function and/or an object tracking function, by using the motion recognition camera 1860-2 and 1860-3. In an embodiment, the motion recognition camera 1860-2 and camera 1860-3 may be disposed on the first rim 1801 and/or the second rim 1802.

The camera 1860 included in the wearable device 101 are not limited to the above-described eye tracking camera 1860-1 and the motion recognition camera 1860-2 and 1860-3. For example, the wearable device 101 may identify an external object included in a field of view (FoV) by using a camera disposed toward the user's FoV. The wearable device 101 identifying the external object may be performed based on a sensor for identifying a distance between the wearable device 101 and the external object, such as a depth sensor and/or a time of flight (ToF) sensor. The camera 1860 disposed toward the FoV may support an autofocus function and/or an optical image stabilization (OIS) function. For example, in order to obtain an image including a face of the user wearing the wearable device 101, the wearable device 101 may include the camera 1860 (e.g., a face tracking (FT) camera) disposed toward the face.

Although not illustrated, the wearable device 101 according to an embodiment may further include a light source (e.g., LED) that emits light toward a subject (e.g., user's eyes, face, and/or an external object in the FoV) photographed by using the camera 1860. The light source may include an LED having an infrared wavelength. The light source may be disposed on at least one of the frame 1800, and the hinge units 1806 and 1807.

According to an embodiment, the battery module 1870 may supply power to electronic components of the wearable device 101. In an embodiment, the battery module 1870 may be disposed in the first temple 1804 and/or the second temple 1805. For example, the battery module 1870 may be a plurality of battery modules 1870. The plurality of battery modules 1870, respectively, may be disposed on each of the first temple 1804 and the second temple 1805. In an embodiment, the battery module 1870 may be disposed at an end of the first temple 1804 and/or the second temple 1805.

The antenna module 1875 may transmit the signal or power to the outside of the wearable device 101 or may receive the signal or power from the outside. In an embodiment, the antenna module 1875 may be disposed in the first temple 1804 and/or the second temple 1805. For example, the antenna module 1875 may be disposed close to one surface of the first temple 1804 and/or the second temple 1805.

The speaker 1855 may output a sound signal to the outside of the wearable device 101. A sound output module may be referred to as a speaker. In an embodiment, the speaker 1855 may be disposed in the first temple 1804 and/or the second temple 1805 in order to be disposed adjacent to the ear of the user wearing the wearable device 101. For example, the speaker 1855 may include a second speaker 1855-2 disposed adjacent to the user's left ear by being disposed in the first temple 1804, and a first speaker 1855-1 disposed adjacent to the user's right ear by being disposed in the second temple 1805.

The light emitting module (not illustrated) may include at least one light emitting element. The light emitting module may emit light of a color corresponding to a specific state or may emit light through an operation corresponding to the specific state in order to visually provide information on a specific state of the wearable device 101 to the user. For example, when the wearable device 101 requires charging, it may emit red light at a constant cycle. In an embodiment, the light emitting module may be disposed on the first rim 1801 and/or the second rim 1802.

Referring to FIG. 18B, according to an embodiment, the wearable device 101 may include the printed circuit board (PCB) 1890. The PCB 1890 may be included in at least one of the first temple 1804 or the second temple 1805. The PCB 1890 may include an interposer disposed between at least two sub PCBs. On the PCB 1890, one or more hardware (e.g., hardware of blocks of FIG. 2) included in the wearable device 101 may be disposed. The wearable device 101 may include a flexible PCB (FPCB) for interconnecting the hardware.

According to an embodiment, the wearable device 101 may include at least one of a gyro sensor, a gravity sensor, and/or an acceleration sensor for detecting the posture of the wearable device 101 and/or the posture of a body part (e.g., a head) of the user wearing the wearable device 101. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor (e.g., the inertial sensor 230), and the gyro sensor (e.g., the inertial sensor 230) may be referred to as an inertial measurement unit (IMU). According to an embodiment, the wearable device 101 may identify the user's motion and/or gesture performed to execute or stop a specific function of the wearable device 101 based on the IMU.

FIGS. 19A to 19B represent an example of an exterior of a wearable device. The wearable device 101 of FIGS. 19A to 19B may be an example of the wearable device 101 of FIG. 1. According to an embodiment, an example of an exterior of a first surface 1910 of a housing of the wearable device 101 may be illustrated in FIG. 19A, and an example of an exterior of a second surface 1920 opposite to the first surface 1910 may be illustrated in FIG. 19B.

Referring to FIG. 19A, according to an embodiment, the first surface 1910 of the wearable device 101 may have an attachable shape on the user's body part (e.g., the user's face). Although not illustrated, the wearable device 101 may further include a strap for being fixed on the user's body part, and/or one or more temples (e.g., the first temple 1804 and/or the second temple 1805 of FIGS. 18A to 18B). A first display 1850-1 for outputting an image to the left eye among the user's two eyes and a second display 1850-2 for outputting an image to the right eye among the user's two eyes may be disposed on the first surface 1910. The wearable device 101 may further include rubber or silicon packing, which are formed on the first surface 1910, for preventing interference by light (e.g., ambient light) different from the light emitted from the first display 1850-1 and the second display 1850-2.

According to an embodiment, the wearable device 101 may include a camera 1860-1 for photographing and/or tracking two eyes of the user adjacent to each of the first display 1850-1 and the second display 1850-2. The camera 1860-1 may be referred to as the gaze tracking camera 1860-1 of FIG. 18B. According to an embodiment, the wearable device 101 may include cameras 1860-5 and 1860-6 for photographing and/or recognizing the user's face. The cameras 1860-5 and 1860-6 may be referred to as a FT camera. The wearable device 101 may control an avatar representing a user in a virtual space, based on a motion of the user's face identified using the cameras 1860-5 and 1860-6. For example, the wearable device 101 may change a texture and/or a shape of a portion (e.g., a portion of an avatar representing a human face) of the avatar, by using information obtained by the cameras 1860-5 and 1860-6 (e.g., the FT camera) and representing the facial expression of the user wearing the wearable device 101.

Referring to FIG. 19B, a camera (e.g., cameras 1860-7, 1860-8, 1860-9, 1860-10, 1860-11, and 1860-12), and/or a sensor (e.g., the depth sensor 1930) for obtaining information associated with the external environment of the wearable device 101 may be disposed on the second surface 1920 opposite to the first surface 1910 of FIG. 19A. For example, the cameras 1860-7, 1860-8, 1860-9, and 1860-10 may be disposed on the second surface 1920 in order to recognize an external object. The cameras 1860-7, 1860-8, 1860-9, and 1860-10 may be referred to as the motion recognition cameras 1860-2 and 1860-3 of FIG. 18B.

For example, by using cameras 1860-11 and 1860-12, the wearable device 101 may obtain an image and/or video to be transmitted to each of the user's two eyes. The camera 1860-11 may be disposed on the second surface 1920 of the wearable device 101 to obtain an image to be displayed through the second display 1850-2 corresponding to the right eye among the two eyes. The camera 1860-12 may be disposed on the second surface 1920 of the wearable device 101 to obtain an image to be displayed through the first display 1850-1 corresponding to the left eye among the two eyes. The cameras 1860-11 and 1860-12 may be referred to as the photographing camera 1860-4 of FIG. 18B.

According to an embodiment, the wearable device 101 may include the depth sensor 1930 disposed on the second surface 1920 in order to identify a distance between the wearable device 101 and the external object. By using the depth sensor 1930, the wearable device 101 may obtain spatial information (e.g., a depth map) about at least a portion of the FoV of the user wearing the wearable device 101. Although not illustrated, a microphone for obtaining sound outputted from the external object may be disposed on the second surface 1920 of the wearable device 101. The number of microphones may be one or more according to embodiments.

In embodiments, an electronic device 101 is provided. The electronic device may comprise a barometric pressure sensor 210 including a sensing element 310 and a waterproof member 330 for protecting the sensing element, an inertial sensor 230, a processor 120, and memory storing instructions. The instructions, when executed by the processor 120, may cause the electronic device 101 to determine direction information of the barometric pressure sensor 210 from sensing data of the inertial sensor 230, determine a correction value in accordance with the direction information of the barometric pressure sensor 210, based on pressure offset data for the sensing element in each of designated directions of the barometric pressure sensor, and provide pressure information using pressure data of the barometric pressure sensor 210 and the correction value.

For example, the barometric pressure sensor 210 may include a housing, a substrate, and an application specific integrated circuit (ASIC) configured to output a sensing result of the sensing element 310. The sensing element 310 may include a micro electro mechanical systems (MEMS) sensor. The waterproof member 330 may include a gel disposed in a space within the housing so as to cover the sensing element 210 and the ASIC. The pressure offset data for the sensing element 310 may be stored in the ASIC.

For example, each of the designated directions may indicate a direction in which a pressure sensing surface of the sensing element 310 faces. The pressure offset data for the sensing element 310 may indicate a difference between a pressure value measured through the sensing element 310 in a corresponding direction and a reference pressure value.

For example, the designated directions may include a first direction in which the pressure sensing surface and a ground face a same direction, a second direction in which the pressure sensing surface is substantially perpendicular to the ground, and a third direction in which the pressure sensing surface and the ground face opposite directions.

For example, the instructions, when executed by the processor 120, may cause the electronic device 101 to obtain, from the barometric pressure sensor 210, the pressure offset data for the sensing element 310 in each of the designated directions of the barometric pressure sensor 210, determine an operation scheme between a direction of the barometric pressure sensor 210 and a pressure correction value using the pressure offset data, and determine the correction value in accordance with the direction information of the barometric pressure sensor 210 using the operation scheme.

For example, the operation scheme may include a polynomial representing the pressure correction value in accordance with the direction of the barometric pressure sensor 210. Coefficients of the polynomial may be obtained in accordance with the pressure offset data for the sensing element 310 in each of the designated directions.

For example, the instructions, when executed by the processor 120, may cause the electronic device 101 to determine direction information of the inertial sensor 230 from the sensing data of the inertial sensor 230, and determine the direction information of the barometric pressure sensor 210 based on an angular difference between the inertial sensor 230 and the barometric pressure sensor 210.

For example, the instructions, when executed by the processor 120, may cause the electronic device 101 to determine whether an acceleration variance of the electronic device 101 obtained from the sensing data is less than a threshold value, determine the direction information of the inertial sensor 230 through the sensing data in a case that the acceleration variance of the electronic device 101 is smaller than the threshold value, and determine the direction information of the inertial sensor 230 through previous sensing data of the inertial sensor 230 and rotation information of the electronic device 101 in a case that the acceleration variance of the electronic device 101 is equal to or greater than the threshold value. The previous sensing data may correspond to a case in which the acceleration variance is less than the threshold value.

For example, the instructions, when executed by the processor 120, may cause the electronic device 101 to filter the direction information of the inertial sensor 230 and determine the direction information of the barometric pressure sensor 210 based on the filtered direction information and the angular difference between the inertial sensor 230 and the barometric pressure sensor 210.

For example, the angular difference between the inertial sensor 230 and the barometric pressure sensor 210 may indicate an angular difference between a surface on which the inertial sensor 230 is disposed and a surface on which the barometric pressure sensor 210 is disposed. The angular difference may be obtained from the barometric pressure sensor 210 or obtained by a designated user input.

For example, the electronic device 101 may further comprise a display. The pressure information may be displayed through the display.

For example, the inertial sensor 230 may include a three-axis acceleration sensor or a six-axis gyro acceleration sensor.

For example, the electronic device may include a wearable device configured to be worn on a part of a body of a user. The sensing data of the inertial sensor 230 may include a rotational value in an axial direction between a side of the part of the body of the user and another side opposite to the side.

For example, the wearable device may be a head mount display (HMD) device configured to be worn on a head of a user, a watch-type device configured to be worn on a wrist of a user, or a ring-type device configured to be worn on a finger of a user.

For example, the instructions, when executed by the processor 120, may cause the electronic device 101 to determine whether a designated application is being executed, provide measured pressure information using the pressure data measured through the barometric pressure sensor 210 in a case that the designated application is not being executed, and provide the pressure information using the pressure data and the correction value in a case that the designated application is being executed.

In embodiments, an electronic device 101 is provided. The electronic device 101 may comprise a display, a barometric pressure sensor 210 including a sensing element 310 and a waterproof member 330 for protecting the sensing element 310, an inertial sensor 230, a processor 120, and memory storing instructions. The instructions, when executed by the processor 120, may cause the electronic device 101 to display, through the display, first pressure information through a first correction value in accordance with a first direction when the barometric pressure sensor 210 faces the first direction at a designated height, and to display, through the display, second pressure information through a second correction value in accordance with a second direction when the barometric pressure sensor 210 faces the second direction at the designated height. An angle formed between the second direction and a gravity direction may be smaller than an angle between the first direction and the gravity direction. The second correction value may indicate larger pressure magnitude than the first correction value. For example, first pressure data measured when the barometric pressure sensor 210 faces the first direction at the designated height may be smaller than second pressure data measured when the barometric pressure sensor 210 faces the second direction at the designated height.

For example, a difference between the first pressure information and the second pressure information may be smaller than a difference between the first correction value and the second correction value.

For example, the first correction value and the second correction value may be determined in accordance with a designated operation scheme. The designated operation scheme may be determined based on pressure offset data for the sensing element 310 in each of designated directions of the barometric pressure sensor 210. The pressure offset data for the sensing element 310 may be stored in the barometric pressure sensor 210.

In embodiments, a non-transitory computer-readable recording medium is provided. The non-transitory computer-readable recording medium may store instructions. The instructions, when executed by a processor 120, may cause an electronic device 101 to determine direction information of a barometric pressure sensor 210 of the electronic device 101 from sensing data of an inertial sensor 230 of the electronic device 101, determine a correction value in accordance with the direction information of the barometric pressure sensor 210 based on pressure offset data for a sensing element 310 of the barometric pressure sensor 210 in each of designated directions of the barometric pressure sensor 210, and provide pressure information using pressure data of the barometric pressure sensor 210 and the correction value.

In embodiments, a method performed by an electronic device 101 is provided. The method may comprise determining direction information of a barometric pressure sensor 210 of the electronic device 101 from sensing data of an inertial sensor 230 of the electronic device 101. The method may comprise determining a correction value in accordance with the direction information of the barometric pressure sensor 210 based on pressure offset data for a sensing element 310 of the barometric pressure sensor 210 in each of designated directions of the barometric pressure sensor 210. The method may comprise providing pressure information using pressure data of the barometric pressure sensor 210 and the correction value. The barometric pressure sensor 210 may include a waterproof member 330 for protecting the sensing element 310.

In embodiments, a non-transitory computer-readable recording medium is provided. The non-transitory computer-readable recording medium may store instructions. The instructions, when executed by a processor 120, may cause an electronic device 101 to display, through the display of the electronic device 101, first pressure information through a first correction value in accordance with a first direction when the barometric pressure sensor 210 faces the first direction at a designated height, and to display, through the display, second pressure information through a second correction value in accordance with a second direction when the barometric pressure sensor 210 faces the second direction at the designated height. An angle formed between the second direction and a gravity direction may be smaller than an angle between the first direction and the gravity direction. The second correction value may indicate larger pressure magnitude than the first correction value.

In embodiments, a method performed by an electronic device is provided. The method may comprise displaying, through the display of the electronic device, first pressure information through a first correction value in accordance with a first direction when the barometric pressure sensor faces the first direction at a designated height, and displaying, through the display, second pressure information through a second correction value in accordance with a second direction when the barometric pressure sensor faces the second direction at the designated height. An angle formed between the second direction and a gravity direction may be smaller than an angle between the first direction and the gravity direction. The second correction value may indicate larger pressure magnitude than the first correction value.

According to embodiments of the present disclosure, an electronic device 101 enables more accurate measurement of atmospheric pressure (or water pressure) by reflecting, in actually measured pressure data, a pressure correction value corresponding to a direction of a pressure sensing surface of the sensing element 310 of the barometric pressure sensor 210. By identifying a direction of the barometric pressure sensor 210 that varies according to a posture of the electronic device 101 and applying a pressure offset corresponding to the direction, a problem of measurement distortion caused by the waterproof member 330 may be resolved. A user of the electronic device 101 may obtain more accurate information due to accurate measurement of altitude (or water depth), and may receive a service associated with height without error.

The effects that can be obtained from the present disclosure are not limited to those described above, and any other effects not mentioned herein will be clearly understood by those having ordinary knowledge in the art to which the present disclosure belongs, from the following description.

For one or more embodiments, at least one of components described in one or more of the preceding drawings may be configured to perform one or more operations, techniques, processes, and/or methods as described in the present disclosure. For example, a processor (e.g., a baseband processor) described in the present disclosure in association with one or more of the preceding drawings may be configured to operate according to one or more examples described in the present disclosure. As another example, circuitry associated with user equipment (UE), a base station, a network element, or the like as described above in association with one or more of the preceding drawings may be configured to operate according to one or more examples described herein.

Any of the embodiments described above may be combined with any other embodiment (or a combination of embodiments) unless explicitly stated otherwise. The description of one or more implementations described above is provided for illustration and description, and is not intended to be exhaustive or to limit the scope of the embodiments to the precise forms disclosed. Modifications and variations are possible in light of the above teachings or may be obtained from practice of various embodiments.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a barometric pressure sensor including a sensing element and a waterproof member for protecting the sensing element;
an inertial sensor;
a processor; and
memory storing instructions,
wherein the instructions, when executed by the processor, cause the electronic device to:
determine direction information of the barometric pressure sensor from sensing data of the inertial sensor;
determine a correction value in accordance with the direction information of the barometric pressure sensor, based on pressure offset data for the sensing element in each of designated directions of the barometric pressure sensor; and
provide pressure information using pressure data of the barometric pressure sensor and the correction value.

2. The electronic device of claim 1,
wherein the barometric pressure sensor includes a housing, a substrate, and an application specific integrated circuit (ASIC) configured to output a sensing result of the sensing element,
wherein the sensing element includes a micro electro mechanical systems (MEMS) sensor,
wherein the waterproof member includes a gel disposed in a space within the housing so as to cover the sensing element and the ASIC, and
wherein the pressure offset data for the sensing element is stored in the ASIC.

3. The electronic device of claim 1,
wherein each of the designated directions indicates a direction in which a pressure sensing surface of the sensing element faces, and
wherein the pressure offset data for the sensing element indicates a difference between a pressure value measured through the sensing element in a corresponding direction and a reference pressure value.

4. The electronic device of claim 3,
wherein the designated directions include:
a first direction in which the pressure sensing surface and a ground face a same direction,
a second direction in which the pressure sensing surface is substantially perpendicular to the ground, and
a third direction in which the pressure sensing surface and the ground face opposite directions.

5. The electronic device of claim 1,
wherein the instructions, when executed by the processor, cause the electronic device to:
obtain, from the barometric pressure sensor, the pressure offset data for the sensing element in each of the designated directions of the barometric pressure sensor;
determine an operation scheme between a direction of the barometric pressure sensor and a pressure correction value using the pressure offset data; and
determine the correction value in accordance with the direction information of the barometric pressure sensor using the operation scheme.

6. The electronic device of claim 5,
wherein the operation scheme includes a polynomial representing the pressure correction value in accordance with the direction of the barometric pressure sensor, and
wherein coefficients of the polynomial are obtained in accordance with the pressure offset data for the sensing element in each of the designated directions.

7. The electronic device of claim 1,
wherein the instructions, when executed by the processor, cause the electronic device to:
determine direction information of the inertial sensor from the sensing data of the inertial sensor; and
determine the direction information of the barometric pressure sensor based on an angular difference between the inertial sensor and the barometric pressure sensor.

8. The electronic device of claim 7,
wherein the instructions, when executed by the processor, cause the electronic device to:
determine whether an acceleration variance of the electronic device obtained from the sensing data is less than a threshold value;
determine the direction information of the inertial sensor through the sensing data in a case that the acceleration variance of the electronic device is smaller than the threshold value; and
determine the direction information of the inertial sensor through previous sensing data of the inertial sensor and rotation information of the electronic device in a case that the acceleration variance of the electronic device is equal to or greater than the threshold value,
wherein the previous sensing data corresponds to a case in which the acceleration variance is less than the threshold value.

9. The electronic device of claim 8,
wherein the instructions, when executed by the processor, cause the electronic device to:
filter the direction information of the inertial sensor; and
determine the direction information of the barometric pressure sensor based on the filtered direction information and the angular difference between the inertial sensor and the barometric pressure sensor.

10. The electronic device of claim 8,
wherein the angular difference between the inertial sensor and the barometric pressure sensor indicates an angular difference between a surface on which the inertial sensor is disposed and a surface on which the barometric pressure sensor is disposed, and
wherein the angular difference is obtained from the barometric pressure sensor or obtained by a designated user input.

11. The electronic device of claim 1,
wherein the electronic device includes a wearable device configured to be worn on a part of a body of a user, and
wherein the sensing data of the inertial sensor includes a rotational value in an axial direction between a side of the part of the body of the user and another side opposite to the side.

12. The electronic device of claim 11,
wherein the wearable device is a head mount display (HMD) device configured to be worn on a head of a user, a watch-type device configured to be worn on a wrist of a user, or a ring-type device configured to be worn on a finger of a user.

13. The electronic device of claim 1,
wherein the instructions, when executed by the processor, cause the electronic device to:
determine whether a designated application is being executed;
provide measured pressure information using the pressure data measured through the barometric pressure sensor in a case that the designated application is not being executed; and
provide the pressure information using the pressure data and the correction value in a case that the designated application is being executed.

14. A method performed by an electronic device, the method comprising:
determining direction information of a barometric pressure sensor of the electronic device from sensing data of an inertial sensor of the electronic device;
determining a correction value in accordance with the direction information of the barometric pressure sensor based on pressure offset data for a sensing element of the barometric pressure sensor in each of designated directions of the barometric pressure sensor,
wherein the barometric pressure sensor includes a waterproof member for protecting the sensing element; and
providing pressure information using pressure data of the barometric pressure sensor and the correction value.

15. A non-transitory computer-readable recording medium storing instructions,
wherein the instructions, when executed by a processor, cause an electronic device to:
determine direction information of a barometric pressure sensor of the electronic device from sensing data of an inertial sensor of the electronic device;
determine a correction value in accordance with the direction information of the barometric pressure sensor based on pressure offset data for a sensing element of the barometric pressure sensor in each of designated directions of the barometric pressure sensor; and
provide pressure information using pressure data of the barometric pressure sensor and the correction value.
